(19) **Europäisches Patentamt / European Patent Office / Office européen des brevets**

(11) **EP 3 901 966 B1**

(12) **EUROPEAN PATENT SPECIFICATION**

(45) Date of publication and mention
of the grant of the patent:
**13.09.2023 Bulletin 2023/37**

(21) Application number: **19901087.7**

(22) Date of filing: **16.12.2019**

(51) International Patent Classification (IPC):
*H05B 3/34* (2006.01)    *H05B 3/14* (2006.01)
*H01B 7/08* (2006.01)    *C09J 7/30* (2018.01)
*C09J 9/02* (2006.01)

(52) Cooperative Patent Classification (CPC):
**C09J 7/30; B32B 3/08; B32B 5/022; B32B 5/024;
B32B 5/026; B32B 5/18; B32B 7/12; B32B 9/005;
B32B 9/025; B32B 9/043; B32B 9/045;
B32B 15/06; B32B 15/082; B32B 15/085;
B32B 15/088;** (Cont.)

(86) International application number:
**PCT/JP2019/049157**

(87) International publication number:
**WO 2020/129894 (25.06.2020 Gazette 2020/26)**

(54) **CONDUCTIVE ADHESIVE SHEET, LAMINATE, AND HEATING DEVICE**

LEITFÄHIGE KLEBEFOLIE, LAMINAT UND HEIZVORRICHTUNG

FEUILLE ADHÉSIVE CONDUCTRICE, STRATIFIÉ, ET DISPOSITIF CHAUFFANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2018 JP 2018235604**

(43) Date of publication of application:
**27.10.2021 Bulletin 2021/43**

(73) Proprietor: **LINTEC CORPORATION
Itabashi-ku
Tokyo 173-0001 (JP)**

(72) Inventors:
• **MORIOKA, Takashi
Tokyo 173-0001 (JP)**
• **ITO, Masaharu
Tokyo 173-0001 (JP)**
• **HAGIHARA, Yoshiaki
Tokyo 173-0001 (JP)**

(74) Representative: **Gille Hrabal
Partnerschaftsgesellschaft mbB
Patentanwälte
Brucknerstraße 20
40593 Düsseldorf (DE)**

(56) References cited:
**WO-A1-2016/158543    JP-A- H10 214 676
JP-A- S63 227 687    JP-A- 2003 509 820
JP-A- 2007 096 111    US-A- 5 904 874
US-A1- 2010 175 824**

EP 3 901 966 B1

(52) Cooperative Patent Classification (CPC): (Cont.)
**B32B 15/09; B32B 15/095; B32B 21/045;
B32B 21/08; B32B 25/042; B32B 25/045;
B32B 25/06; B32B 25/08; B32B 25/10;
B32B 25/12; B32B 25/14; B32B 25/16;
B32B 25/18; B32B 27/065; B32B 27/08;
B32B 27/10; B32B 27/12; B32B 27/18;
B32B 27/20; B32B 27/22; B32B 27/281;
B32B 27/302; B32B 27/304; B32B 27/308;
B32B 27/32; B32B 27/34; B32B 27/36;
B32B 27/365; B32B 27/40; C09J 9/02;
H05B 3/145; H05B 3/34;** B32B 2250/02;

B32B 2250/24; B32B 2264/0214; B32B 2264/102;
B32B 2264/105; B32B 2270/00; B32B 2274/00;
B32B 2307/538; B32B 2307/732; B32B 2457/00;
C08K 7/04; C08K 2201/001; C09J 2203/302;
C09J 2203/326; C09J 2203/354; C09J 2203/358;
C09J 2301/1242; C09J 2301/312; C09J 2301/314;
H01B 7/0846; H05B 2203/003; H05B 2203/029;
H05B 2214/04

**Description**

TECHNICAL FIELD

The present invention relates to a conductive adhesive sheet, a laminate, and a heat-generating device.

BACKGROUND ART

A conductive adhesive sheet having a pseudo sheet structure in which a plurality of conductive linear bodies are arranged apart from each other is likely to be used as a member of various articles such as a heat-generating body of a heat-generating device, a textile material that generates heat, and a protective film for a display (anti-shatter film).

When a conductive linear body is used as the heat-generating body, various studies have been made on a method of arranging the conductive linear body from the viewpoint of electrical connection.

For instance, Patent Literature 1 discloses a method for production and application of heating elements for heating in a vehicle. This method includes: with the heating element consisting of a heating wire defining at least one electric heating loop extending in its operating position in a predetermined pattern: positioning the heating wire onto at least one side of a temporary carrier; applying an adhesive agent over at least areas of the carrier where the heating wire is lying on the carrier and over the heating wire, causing the heating wire to adhere to a surface of the carrier; transporting the carrier with the heating wire to a final substrate, which the heating element is to be in close contact with; pressing the heating wire against the substrate, heating the adhesive agent so as to make the wire adhere to the substrate; and removing the carrier, so that the heating wire is released from the carrier and adheres to the substrate, to form the heating element for heating in the vehicle.

Patent Literature 2 discloses a sheet-shaped heating element in which cylindrical voids are arranged in parallel in plural rows so as to be inscribed in one surface of a rubber elastic body 1 shaped in a flat plate, and a heating wire is embedded in the cylindrical voids. Patent Literature 3 discloses a self-adhesive heating underlayment comprising a flexible heating element, a first and a second waterproof adhesive material, and a mesh grounding layer attached proximate to the top surface of the flexible heating element. Patent Literature 4 discloses a resistance heating device for flat objects comprising a stack of double-sided adhesive tapes and insulating layers on an insulating substrate carrying resistance heating conductors.

CITATION LIST

PATENT LITERATURE(S)

Patent Literature 1 JP 2003-509820 A
Patent Literature 2 JP H10-214676 A
Patent Literature 3 US 2010/175824 A1
Patent Literature 4 US 5 904 874 A

SUMMARY OF THE INVENTION

PROBLEM(S) TO BE SOLVED BY THE INVENTION

In the heating element disclosed in Patent Literature 1, since an uncured soft adhesive agent is applied onto the heating wire, it becomes difficult to establish electric continuity between the heating wire and electrodes that are arranged in a subsequent step.

In the sheet-shaped heating element disclosed in Patent Literature 2, since the voids for arranging the heating wire need to be provided separately, a process becomes complicated.

On the other hand, a conductive adhesive sheet provided with a plurality of conductive linear bodies has recently been used by being attached to an adherend having relatively large irregularities or an easily deformable adherend. However, when the conductive adhesive sheet is attached, for instance, to the adherend having relatively large irregularities, the conductive linear bodies are sometimes embedded inside an adhesive agent layer. Such embedding of the conductive linear bodies causes poor contact between the conductive linear bodies and electrodes when the electrodes are installed, for instance, on the conductive adhesive sheet.

An object of the invention is to provide a conductive adhesive sheet capable of suppressing embedding of a conductive linear body inside an adhesive agent layer, a laminate having the conductive adhesive sheet, and a heat-generating device.

MEANS FOR SOLVING THE PROBLEM(S)

According to an aspect of the invention, provided is a conductive adhesive sheet including a first adhesive agent layer, a second adhesive agent layer, and a third layer interposed between the first adhesive agent layer and the second adhesive agent layer, in which the first adhesive agent layer has a storage modulus at 25 degrees C of less than $2.5 \times 10^5$ Pa, the third layer has a storage modulus at 25 degrees C of $2.5 \times 10^5$ Pa or more, and a plurality of conductive linear bodies are arranged to the first adhesive agent layer.

In the above aspect of the invention, it is preferable that a thickness t1 of the first adhesive agent layer and a diameter d1 of the conductive linear bodies satisfy a relationship of a numerical formula (Numerical Formula 1) below.

$$0.4 \times d1 \leq t1 \leq 1.2 \times d1 \ldots \qquad \text{(Numerical Formula 1)}$$

In the above aspect of the invention, it is preferable that the second adhesive agent layer has a storage modulus at 25 degrees C of less than $2.5 \times 10^5$ Pa.

In the above aspect of the invention, it is preferable that the conductive linear bodies are conductive wires.

In the above aspect of the invention, it is preferable that each of the conductive linear bodies is at least one selected from the group consisting of a linear body including a metal wire, a linear body including carbon nanotubes, and a linear body in a form of a conductively coated string.

In the above aspect of the invention, it is preferable that the third layer is a thermoplastic elastomer layer.

In the above aspect of the invention, it is preferable that the storage modulus at 25 degrees C of the first adhesive agent layer is less than $2.0 \times 10^5$ Pa.

In the above aspect of the invention, it is preferable that the storage modulus at 25 degrees C of the third layer is $3.5 \times 10^5$ Pa or more.

According to another aspect of the invention, a laminate includes: the conductive adhesive sheet according to the above aspect of the invention; an adherend; the adherend includes a first adherend surface having an arithmetic mean roughness Ra in a range from 1 $\mu$m to 150 $\mu$m, and the second adhesive agent layer is attached to the first adherend surface.

According to still another aspect of the invention, a heat-generating device includes: the laminate according to the above aspect of the invention; and electrodes.

In the above aspect of the invention, it is preferable that the electrodes and the plurality of conductive linear bodies are electrically connected to each other.

According to the invention, a conductive adhesion sheet capable of suppressing embedding of a conductive linear body inside an adhesive agent layer, a laminate having the conductive adhesion sheet, and a heat-generating device can be provided.

BRIEF DESCRIPTION OF DRAWINGS

Fig. 1 schematically shows a conductive adhesive sheet according to a first exemplary embodiment of the invention.
Fig. 2 shows a cross section taken along a II-II line in Fig. 1.
Fig. 3 schematically shows a laminate according to a second exemplary embodiment of the invention.
Fig. 4 shows a cross section taken along a III-III line in Fig. 3.
Fig. 5 schematically shows a heat-generating device according to a third exemplary embodiment of the invention.
Fig. 6 schematically shows a plan view of a heat-generating device according to a fourth exemplary embodiment of the invention.
Fig. 7 is an enlarged view of A part shown in Fig. 6.

DESCRIPTION OF EMBODIMENT(S)

First Exemplary Embodiment

Description will be made below on the invention with reference to the attached drawings with exemplary embodiments cited as an example. The invention is not limited to the contents of the exemplary embodiments. It should be noted that some parts are shown on an enlarged scale or a reduced scale in the drawings for the convenience of explanation.

Conductive Adhesive Sheet

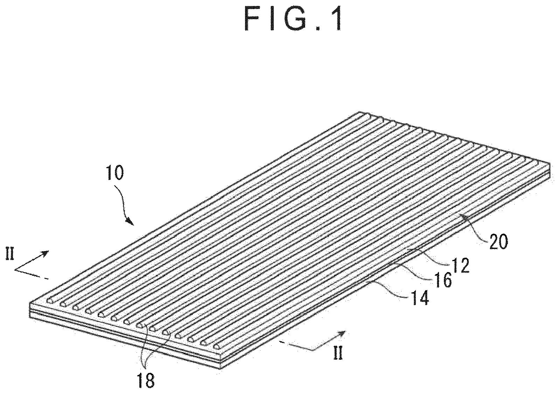

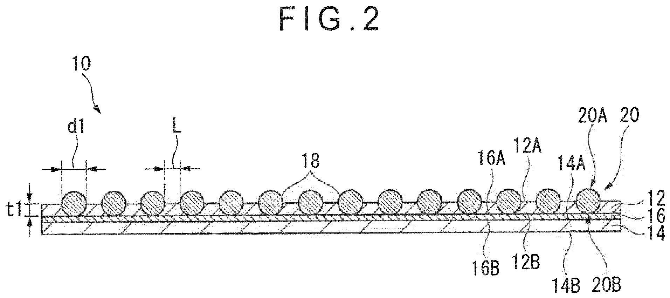

A conductive adhesive sheet 10 according to a first exemplary embodiment includes a first adhesive agent layer 12, a second adhesive agent layer 14, and a third layer 16 interposed between the first adhesive agent layer 12 and the second adhesive agent layer 14, as shown in Figs. 1 and 2.

A plurality of conductive linear bodies 18 are arranged at a distance from each other in the first adhesive agent layer 12. In the first exemplary embodiment, the conductive linear bodies 18 are partially exposed on the first adhesive agent layer 12 as shown in Fig. 2.

Herein, a structure in which the plurality of conductive linear bodies 18 are arranged at a distance from each other is referred to as a "pseudo sheet structure 20."

The pseudo sheet structure 20 has a first surface 20A that is an exposed surface of the conductive linear bodies 18 and a second surface 20B opposite from the first surface 20A and facing the third layer 16.

The first adhesive agent layer 12 has a first adhesive surface 12A on which the conductive linear bodies 18 are exposed and a second adhesive surface 12B opposite from the first adhesive surface 12A and facing the third layer 16.

The second adhesive agent layer 14 has a first adhesive surface 14A facing the third layer 16 and a second adhesive surface 14B opposite from the first adhesive surface 14A.

The third layer 16 has a first surface 16A facing the first adhesive agent layer 12 and a second surface 16B opposite from the first surface 16A and facing the second adhesive agent layer 14.

In other words, the conductive adhesive sheet 10 of the first exemplary embodiment includes the second adhesive agent layer 14, the third layer 16, and the first adhesive agent layer 12 in this order. The pseudo sheet structure 20 is arranged to the first adhesive agent layer 12 so that the second surface 20B of the pseudo sheet structure 20 faces the first surface 16A of the third layer 16.

In the first exemplary embodiment, a storage modulus at 25 degrees C of the first adhesive agent layer 12 is less than $2.5 \times 10^5$ Pa. A storage modulus at 25 degrees C of the third layer 16 is equal to or more than $2.5 \times 10^5$ Pa.

That the storage modulus at 25 degrees C of the first adhesive agent layer 12 (hereinafter, also referred to as "the storage modulus of the first adhesive agent layer 12") is less than $2.5 \times 10^5$ Pa means that the first adhesive agent layer 12 is easily deformable with respect to the third layer 16.

That the storage modulus at 25 degrees C of the third layer 16 (hereinafter, also referred to as "the storage modulus of the third layer 16") is equal to or more than $2.5 \times 10^5$ Pa means that the third layer 16 is not easily deformable with respect to the first adhesive agent layer 12.

According to the conductive adhesive sheet 10 of the first exemplary embodiment, even when the conductive adhesive sheet 10 is attached to an adherend having relatively large irregularities or an easily deformable adherend, the embedding of the conductive linear bodies 18 inside the first adhesive agent layer 12 is suppressed (hereinafter, also referred to as "the effect of the exemplary embodiment").

The adherend having relatively large irregularities or the easily deformable adherend will be described later.

The reason why the effect of the exemplary embodiment is obtained is presumed as follows.

In the conductive adhesive sheet 10 of the first exemplary embodiment, the third layer 16 having the storage modulus at 25 degrees C of $2.5 \times 10^5$ Pa or more, that is, a layer that is not easily deformable, is interposed between the first adhesive agent layer 12 and the second adhesive agent layer 14, and the plurality of conductive linear bodies 18 are arranged to the first adhesive agent layer 12 on the third layer 16.

In the conductive adhesive sheet 10 of the first exemplary embodiment, it is considered that the first adhesive agent layer 12 is less affected by a surface state of the adherend (for example, a degree of irregularities and a degree of softness) due to this configuration. As a result, it is considered that a surface profile of the first adhesive agent layer 12 is easily maintained, and the embedding of the conductive linear bodies 18 inside the first adhesive agent layer 12 is suppressed. Further, according to the configuration of the conductive adhesive sheet 10 of the first exemplary embodiment, for instance, when the second adhesive agent layer 14 is attached to a surface of the adherend, since exposure of the irregularities of the surface of the adherend to the surface of the first adhesive agent layer 12 is suppressed, an adhesive force of the first adhesive agent layer 12 is also ensured. Accordingly, when electrodes are set to the conductive adhesive sheet 10, an electrical connection between the conductive linear bodies 18 and the electrodes is improved.

On the other hand, in order to suppress the embedding of the conductive linear bodies, it is conceivable to increase hardness of the adhesive agent layer on which the conductive linear bodies are arranged, but when the hardness of the adhesive agent layer is simply increased, adhesiveness between the conductive linear bodies and the adhesive agent layer tends to decrease. Accordingly, in the conductive adhesive sheet 10 of the exemplary embodiment, adhesiveness between the conductive linear bodies 18 and the first adhesive agent layer 12 is ensured by interposing the third layer 16 between the first adhesive agent layer 12 and the second adhesive agent layer 14 and adjusting the storage modulus of the third layer 16 and the storage modulus of the first adhesive agent layer 12 in which the conductive linear bodies 18 are arranged.

It should be noted that the conductive adhesive sheet 10 of the exemplary embodiment exhibits the effect of the exemplary embodiment even if the adherend is other than the adherend having relatively large irregularities and easily deformable adherend.

A preferable configuration of the conductive adhesive sheet 10 of the exemplary embodiment will be described.

Storage Modulus at 25 degrees C

Storage Modulus of First Adhesive Agent Layer 12

The storage modulus of the first adhesive agent layer 12 is less than $2.5 \times 10^5$ Pa, preferably less than $2.0 \times 10^5$ Pa, more preferably less than $1.5 \times 10^5$ Pa, further preferably less than $1.0 \times 10^5$ Pa. A lower limit of the storage modulus of the first adhesive agent layer 12 is preferably $1.0 \times 10^3$ Pa or more.

When the storage modulus of the first adhesive agent layer 12 is less than $2.5 \times 10^5$ Pa, adhesiveness between the first adhesive agent layer 12 and the conductive linear bodies is ensured.

Storage Modulus of Third Layer 16

The storage modulus of the third layer 16 is $2.5 \times 10^5$ Pa or more, preferably $2.8 \times 10^5$ Pa or more, more preferably $3.0 \times 10^5$ Pa or more, further preferably $3.5 \times 10^5$ Pa or more, particularly preferably $5.0 \times 10^5$ Pa or more. An upper limit of the storage modulus of the third layer 16 is preferably $3.0 \times 10^9$ Pa or less from a viewpoint of suppressing a decrease in followability to the irregularities of the adherend.

When the storage modulus of the third layer 16 is $2.5 \times 10^5$ Pa or more, a surface profile of the first adhesive agent layer 12 is easily maintained, and the embedding of the conductive linear bodies 18 inside the first adhesive agent layer 12 is easily suppressed.

Storage Modulus of Second Adhesive Agent Layer 14

The storage modulus of the second adhesive agent layer 14 is preferably less than $2.5 \times 10^5$ Pa, more preferably less than $2.0 \times 10^5$ Pa, further preferably less than $1.0 \times 10^5$ Pa. A lower limit of the storage modulus of the second adhesive agent layer 14 is preferably $1.0 \times 10^3$ Pa or more.

When the storage modulus of the second adhesive agent layer 14 is less than $2.5 \times 10^5$ Pa, for instance, when the adherend is attached to the second adhesive agent layer 14, followability of the second adhesive agent layer 14 to the adherend becomes favorable, so that adhesiveness and an adhesive force between the second adhesive agent layer 14 and the adherend are easily improved.

Examples of a method of adjusting the storage modulus of each of the first adhesive agent layer 12, the third layer 16, and the second adhesive agent layer 14 to the above range include a method of selecting a resin type forming each layer, a method of adjusting a weight average molecular weight of the resin, a method of adjusting a ratio of monomers contained in the resin when the resin is a copolymer, and a method of adjusting added amounts of various additives.

Details of a method of measuring the storage modulus at 25 degrees C will be described in the description of Examples.

In the conductive adhesive sheet 10 of the exemplary embodiment, a thickness t1 of the first adhesive agent layer 12 and a diameter d1 of each of the conductive linear bodies 18 preferably satisfy a relationship of the following numerical formula (Numerical Formula 1), more preferably a relationship of the following numerical formula (Numerical Formula 1A), further preferably a relationship of the following numerical formula (Numerical Formula 1B).

When the thickness t1 of the first adhesive agent layer 12 is "diameter d1 $\times$ 0.4 or more" of each of the conductive linear bodies 18, adhesiveness between the first adhesive agent layer 12 and the conductive linear bodies 18 is easily ensured. When the thickness t1 of the first adhesive agent layer 12 is "diameter d1 $\times$ 0.4 or more" of each of the conductive linear bodies 18, the adhesive force of the first adhesive agent layer 12 is easily ensured.

When the thickness t1 of the first adhesive agent layer 12 is "diameter d1 $\times$ 1.2 or less" of each of the conductive linear bodies 18, the conductive linear bodies 18 are easily maintained in an exposed state on the first adhesive agent layer 12, so that the electrical connection between the conductive linear bodies 18 and the electrodes is improved. When the thickness t1 is "diameter d1 $\times$ more than 1.2", the conductive linear bodies 18 are likely to be embedded inside the first adhesive agent layer 12, so that the electrical connection between the conductive linear bodies 18 and the electrodes is likely to become poor.

$$0.4 \times d1 \leq t1 \leq 1.2 \times d1 \cdots \quad \text{(Numerical Formula 1)}$$

$$0.6 \times d1 \leq t1 \leq 1.0 \times d1 \ldots \quad \text{(Numerical Formula 1A)}$$

$$0.75 \times d1 \leq t1 \leq 0.95 \times d1 \ldots \quad \text{(Numerical Formula 1B)}$$

The thickness t1 of the first adhesive agent layer 12 is determined by observing a cross section of the first adhesive agent layer 12 using a scanning electron microscope (SEM), measuring the thickness t1 of the first adhesive agent layer 12 at five randomly selected positions, and obtaining an average value of the measured values of the thickness t1.

A preferable range of the thickness t1 of the first adhesive agent layer 12 will be described later.

The diameter d1 of the conductive linear bodies 18 is determined by observing the conductive linear bodies 18 of the pseudo sheet structure 20 using a digital microscope, measuring the diameter d1 of each of the conductive linear bodies 18 at five randomly selected positions, and obtaining an average value of the measured values of the diameter d1.

A preferable range of the diameter d1 of each of the conductive linear bodies 18 will be described later.

A structure of the conductive adhesive sheet 10 of the exemplary embodiment will be described.

First Adhesive Agent Layer

The first adhesive agent layer 12 is a layer containing an adhesive agent.

The storage modulus at 25 degrees C of the first adhesive agent layer 12 is not particularly limited as long as being less than $2.5 \times 10^5$ Pa.

Examples of the adhesive agent contained in the first adhesive agent layer 12 include a pressure-sensitive adhesive agent (sticky agent), curing adhesive agent, and a so-called heat-sealing adhesive agent for adhering by heat. Alternatively, a modified polyolefin resin is also usable as the adhesive agent contained in the first adhesive agent layer 12.

Pressure-Sensitive Adhesive Agent (Sticky Agent)

The first adhesive agent layer 12 is preferably a sticky agent layer formed from a pressure-sensitive adhesive agent (sticky agent) in terms of an easy control of the storage modulus and a simple application.

The sticky agent is not particularly limited. Examples of the sticky agent include an acrylic sticky agent, urethane sticky agent, rubber sticky agent, polyester sticky agent, silicone sticky agent, and polyvinylether sticky agent. Among the above, the sticky agent is preferably at least one selected from the group consisting of an acrylic sticky agent, a urethane sticky agent, and a rubber sticky agent, more preferably an acrylic sticky agent.

Examples of an acrylic sticky agent include an acrylic polymer including a constituent unit derived from alkyl (meth)acrylate having a linear alkyl group or a branched alkyl group (i.e., a polymer with at least alkyl (meth)acrylate polymerized) and an acrylic polymer including a constituent unit derived from a (meth)acrylate with a ring structure (i.e., a polymer with at least a (meth)acrylate with a ring structure polymerized). Herein, the "(meth)acrylate" is used as a term referring to both "acrylate" and "methacrylate" and the same applies to other similar terms.

In a case where the acrylic polymer is a copolymer, a manner of copolymerization is not particularly limited. The acrylic copolymer may be any one of a block copolymer, a random copolymer, and a graft copolymer.

Among the above, an acrylic copolymer including a constituent unit (a1) derived from alkyl (meth)acrylate (a1') having a chain alkyl group having 1 to 20 carbon atoms (hereinafter, also referred to as "monomer component (a1')") and a constituent unit (a2) derived from a functional-group-containing monomer (a2') (hereinafter, also referred to as "monomer component (a2')") is preferable as the acrylic sticky agent.

It should be noted that the acrylic copolymer may further include a constituent unit (a3) derived from a monomer component (a3') other than the monomer component (a1') and the monomer component (a2').

In terms of an improvement in adhesion properties, the number of the carbon atoms of the chain alkyl group of the monomer component (a1') is preferably in a range from 1 to 12, more preferably in a range from 4 to 8, further preferably in a range from 4 to 6. Examples of the monomer component (a1') include methyl (meth)acrylate, ethyl (meth)acrylate, propyl (meth)acrylate, n-butyl (meth)acrylate, 2-ethylhexyl (meth)acrylate, lauryl (meth)acrylate, tridecyl (meth)acrylate, and stearyl (meth)acrylate. Among these monomer components (a1'), butyl (meth)acrylate and 2-ethylhexyl (meth)acrylate are preferable and butyl (meth)acrylate is more preferable.

The content of the constituent unit (a1) relative to all the constituent units of the acrylic copolymer (100 mass%) is preferably in a range from 50 mass% to 99.5 mass%, more preferably in a range from 55 mass% to 99 mass%, further preferably in a range from 60 mass% to 97 mass%, particularly preferably in a range from 65 mass% to 95 mass%.

Examples of the monomer component (a2') include a hydroxy-group-containing monomer, a carboxy-group-containing monomer, an epoxy-group-containing monomer, an amino-group-containing monomer, a cyano-group-containing monomer, a keto-group-containing monomer, and an alkoxysilyl-group-containing monomer. Among these monomer components (a2'), a hydroxy-group-containing monomer and a carboxy-group-containing monomer are preferable.

Examples of a hydroxy-group-containing monomer include 2-hydroxyethyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate, among which 2-hydroxyethyl (meth)acrylate is preferable.

Examples of a carboxy-group-containing monomer include a (meth)acrylic acid, a maleic acid, a fumaric acid, and an itaconic acid, among which a (meth)acrylic acid is preferable.

Examples of an epoxy-group-containing monomer include glycidyl (meth)acrylate.

Examples of an amino-group-containing monomer include diaminoethyl (meth)acrylate.

Examples of a cyano-group-containing monomer include acrylonitrile.

The content of the constituent unit (a2) relative to all the constituent units of the acrylic copolymer (100 mass%) is preferably in a range from 0.1 mass% to 50 mass%, more preferably in a range from 0.5 mass% to 40 mass%, further preferably in a range from 1.0 mass% to 30 mass%, particularly preferably in a range from 1.5 mass% to 20 mass%.

Examples of the monomer component (a3') include a (meth)acrylate having a ring structure (e.g., cyclohexyl (meth)acrylate, benzil (meth)acrylate, isobornyl (meth)acrylate, dicyclopentanyl (meth)acrylate, dicyclopentenyl (meth)acrylate, dicyclopentenyloxyethyl (meth)acrylate, imide (meth)acrylate, and acryloylmorpholine), vinyl acetate, and styrene.

The content of the constituent unit (a3) relative to all the constituent units of the acrylic copolymer (100 mass%) is preferably in a range from 0 mass% to 40 mass%, more preferably in a range from 0 mass% to 30 mass%, further preferably in a range from 0 mass% to 25 mass%, particularly preferably in a range from 0 mass% to 20 mass%.

The above monomer components (a1') may be used alone or two or more thereof may be used in combination. The above monomer components (a2') may be used alone or two or more thereof may be used in combination. The above monomer components (a3') may be used alone or two or more thereof may be used in combination.

The acrylic copolymer may be cross-linked by a cross-linker. Examples of the cross-linker include a known epoxy cross-linker, isocyanate cross-linker, aziridine cross-linker, and metal chelate cross-linker. In cross-linking the acrylic copolymer, a functional group derived from the monomer component (a2') can be used as a crosslink point to react with the cross-linker.

The first adhesive agent layer 12 may further contain an energy-ray curable component in addition to the above sticky agent.

When the energy ray is, for instance, an ultraviolet ray, the energy-ray-curable component may be a compound having two or more ultraviolet-polymerizable functional groups in a molecule. Examples of such a compound include trimethylolpropane tri(meth)acrylate, ethoxylated isocyanuric acid tri(meth)acrylate, ditrimethylolpropane tetra(meth)acrylate, tetramethylolmethane tetra(meth)acrylate, pentaerythritol tri(meth)acrylate, dipentaerythritol monohydroxy penta(meth)acrylate, dipentaerythritol hexa(meth)acrylate, caprolactone-modified dipentaerythritol hexa(meth)acrylate, 1,4-butylene glycol di(meth)acrylate, 1,6-hexanediol di(meth)acrylate, dicyclopentadiene dimethoxy di(meth)acrylate, polyethylene glycol di(meth)acrylate, oligoester(meth)acrylate, urethane(meth)acrylate oligomer, epoxy-modified (meth)acrylate, and polyether(meth)acrylate.

One of the energy-ray-curable components may be used alone or a mixture of two or more thereof may be used.

Further, in a case where the acrylic sticky agent is used as the sticky agent, a compound having a functional group reactive with the functional group derived from the monomer component (a2') of the acrylic copolymer and an energy-ray polymerizable functional group in one molecule as the energy-ray curable component. Reaction between the functional group of the compound and the functional group derived from the monomer component (a2') of the acrylic copolymer enables a side chain of the acrylic copolymer to be polymerizable by energy ray irradiation. Even in a case where the sticky agent is not the acrylic sticky agent, a component with an energy-ray polymerizable side chain may likewise be used as a copolymer component other than the copolymer that serves as the sticky agent.

Curing Adhesive Agent

When the adhesive agent contained in the first adhesive agent layer 12 is a curing adhesive agent, the curing adhesive agent is exemplified by an energy ray-curing adhesive agent, thermosetting adhesive agent, and naturally curing adhesive agent.

Since the first adhesive agent layer 12 cures in a short time, it is preferable that the first adhesive agent layer 12 is an energy ray-curing adhesive agent layer in terms of productivity.

For instance, a radical curing adhesive is preferably used for forming the energy ray-curing adhesive agent layer. The radical curing adhesive agent is exemplified by an energy ray-curing adhesive agent such as an electron beam curing adhesive agent and an ultraviolet curing adhesive agent. In particular, an energy ray-curing adhesive agent that is curable in a short time is preferable, further an ultraviolet curing adhesive agent that is curable with a low energy is preferable.

The ultraviolet curing adhesive agent can be classified into a radical polymerization-curing adhesive agent and a cationic polymerization adhesive agent. In addition, the radical polymerization-curing adhesive agent can be used as a thermosetting adhesive agent.

Examples of a curing component of the radical polymerization-curing adhesive agent include a compound having a (meth)acryloyl group and a compound having a vinyl group. These curing components can be either monofunctional or bifunctional or higher. Moreover, one of these curing components can be used alone or two or more thereof can be used in combination. As these curing components, for instance, a compound having a (meth) acryloyl group is preferable.

Specific examples of the compound having a (meth) acryloyl group include (meth)acrylic acid (having 1 to 20 carbon atoms) alkyl esters such as methyl (meth)acrylate, ethyl (meth)acrylate, n-propyl (meth)acrylate, isopropyl (meth)acrylate, 2-methyl-2-nitropropyl (meth)acrylate, n-butyl (meth)acrylate, isobutyl (meth)acrylate, s-butyl (meth)acrylate, t-butyl (meth)acrylate, n-pentyl (meth)acrylate, t-pentyl (meth)acrylate, 3-pentyl (meth) acrylate, 2,2-dimethylbutyl (meth)acrylate, n-hexyl (meth)acrylate, cetyl (meth)acrylate, n-octyl (meth)acrylate, 2-ethylhexyl (meth)acrylate, 4-methyl-2-propylpentyl (meth)acrylate, and n-octadecyl (meth)acrylate.

Examples of the compound having a (meth)acryloyl group include cycloalkyl (meth)acrylate (e.g., cyclohexyl (meth)acrylate and cyclopentyl (meth)acrylate), aralkyl (meth)acrylate (e.g., benzyl(meth)acrylate), polycyclic (meth)acrylate (e.g., 2-isobornyl (meth)acrylate, 2-norbornylmethyl (meth)acrylate, 5-norbornene-2-yl-methyl (meth)acrylate, and 3-methyl-2-norbornylmethyl (meth)acrylate), hydroxyl-group-containing (meth)acrylic acid esters (e.g., hydroxyethyl (meth)acrylate, 2-hydroxypropyl (meth)acrylate, and 2,3-dihydroxypropylmethyl-butyl (meth)methacrylate), alkoxy-group or phenoxy-group containing (meth)acrylic acid esters (e.g., 2-methoxyethyl (meth)acrylate, 2-ethoxyethyl(meth)acrylate, 2-methoxymethoxyethyl (meth)acrylate, 3-methoxybutyl (meth)acrylate, ethyl carbitol (meth)acrylate, and phenoxyethyl (meth)acrylate), epoxy-group-containing (meth)acrylic acid esters (e.g., glycidyl (meth)acrylate), halogen-containing (meth)acrylic acid esters (e.g., 2,2,2-trifluoroethyl (meth)acrylate, 2,2,2-trifluoroethylethyl (meth)acrylate, tetrafluoropropyl (meth)acrylate, hexafluoropropyl (meth)acrylate, octafluoropentyl (meth)acrylate, and heptadecafluorodecyl (meth)acrylate), and alkylaminoalkyl (meth)acrylate (e.g., dimethylaminoethyl (meth)acrylate).

Moreover, the examples of the compound having a (meth)acryloyl group include an amide-group-containing monomer such as hydroxyethylacryl amide, N-methylolacrylamide, N-methoxymethylacrylamide (SP value: 22.9), N-ethoxymethylacrylamide, and (meth)acrylamide. In addition, the examples of the compound having a (meth)acryloyl group include a nitrogen-containing monomer such as acryloyl morpholine.

Further, the curing component of the radical polymerization-curing adhesive agent can be exemplified by a compound having a plurality of polymerizable double bonds such as a (meth)acryloyl group and a vinyl group. This compound can be mixed as a cross-linking component with the adhesive agent component. Examples of the curing component to be such a cross-linking component include tripropylene glycol diacrylate, 1,9-nonanediol diacrylate, tricyclodecanedimethanol diacrylate, cyclic trimethylolpropane formal acrylate, dioxane glycol diacrylate, EO-modified diglycerin tetraacrylate, Aronix M-220 (manufactured by Toa Synthetic Co., Ltd.), Light acrylate 1,9ND-A (manufactured by Kyoeisha Chemical Co., Ltd.), Light acrylate DGE-4A (manufactured by Kyoeisha Chemical Co., Ltd.), Light acrylate DCP-A (manufactured by Kyoeisha), SR-531 (manufactured by Sartomer), and CD-536 (manufactured by Sartomer). Further, as necessary, various epoxy (meth)acrylates, urethane (meth)acrylates, polyester (meth)acrylates, various (meth)acrylate monomers and the like can be used as the curing component.

The radical polymerization-curing adhesive agent contains the curing component, and in addition to the curing component, can contain a radical polymerization initiator depending on a type of curing. When the radical polymerization-curing adhesive agent is used for curing with an electron beam, it is not particularly necessary that the radical polymerization-curing adhesive agent contains the radical polymerization initiator. However, when the radical polymerization-curing adhesive agent is used for curing with ultraviolet ray or heat, the radical polymerization-curing adhesive agent contains the radical polymerization initiator. The use amount of the radical polymerization initiator is usually in a range from 0.1 parts by mass to 10 parts by mass, preferably from 0.5 parts by mass to 3 parts by mass with respect to 100 parts by mass of the curing component. Further, as necessary, a photosensitizer for increasing the curing rate and sensitivity by an electron beam typified by a carbonyl compound can be added to the radical polymerization-curing adhesive agent. The use amount of the photosensitizer is usually in a range from 0.001 parts by mass to 10 parts by mass, preferably from 0.01 parts by mass to 3 parts by mass with respect to 100 parts by mass of the curing component.

Examples of the curing component of the cationic polymerization-curing adhesive agent include a compound having an epoxy group and a compound having an oxetanyl group. The compound having an epoxy group is not particularly limited as long as having at least two epoxy groups in the molecule, and various generally known curable epoxy compounds can be used. Preferable examples of the epoxy compound include a compound having at least two epoxy groups and at least one aromatic ring in a molecule, and a compound having at least two epoxy groups in a molecule, at least one of which is formed between two adjacent carbon atoms of an alicyclic ring.

Examples of an aqueous curing adhesive agent used for the formation of the first adhesive agent layer 12 include vinyl polymer-based, gelatin-based, vinyl-based latex-based, polyurethane-based, isocyanate-based, polyester-based, and epoxy-based curing adhesive agents. The adhesive agent layer containing such aqueous adhesive agent can be a layer formed by coating an aqueous solution and drying. The aqueous solution can be prepared, as necessary, by blending a cross-linker, an additive, and a catalyst such as acid.

When the first adhesive agent layer 12 is an energy ray-curing adhesive agent layer, the first adhesive agent layer 12 preferably contains a photopolymerization initiator. The photopolymerization initiator enables increasing a speed at which the first adhesive agent layer 12 is cured by energy ray irradiation. Examples of the photopolymerization initiator include benzophenone, acetophenone, benzoin, benzoinmethylether, benzoinethylether, benzoinisopropylether, benzoinisobutylether, benzoin benzoic acid, benzoin methyl benzoate, benzoin dimethylketal, 2,4-diethyl thioxanthone, 1-hydroxy cyclohexylphenylketone, benzyl diphenyl sulfide, tetramethylthiuram monosulfide, azobisisobutyronitrile, benzyl, dibenzyl, diacetyl, 2-chloroanthraquinone, 2,4,6-trimethylbenzoyl diphenylphosphine oxide, 2-benzothiazole-N,N-diethyl dithiocarbamate, and oligo{2-hydroxy-2-methyl-1 -[4-(1 -propenyl)phenyl]propanone}.

One of the photopolymerization initiators may be used alone or a mixture of two or more thereof may be used.

Modified Polyolefin Resin

The adhesive agent contained in the first adhesive agent layer 12 is preferably a modified polyolefin resin from the viewpoint of adhesiveness to a target to be heated and a wire and low moisture permeability.

The modified polyolefin resin is a polyolefin resin into which a functional group has been introduced, which is obtained by subjecting a polyolefin resin as a precursor to a modification treatment using a modifier.

The polyolefin resin refers to a polymer containing a repeating unit derived from an olefin monomer.

The polyolefin resin may be a polymer consisting of only repeating units derived from an olefin monomer, or may be a polymer including a repeating unit derived from an olefin monomer and a repeating unit derived from a monomer copolymerizable with the olefin monomer.

The olefin monomer is preferably $\alpha$-olefin having 2 to 8 carbon atoms, more preferably ethylene, propylene, 1-butene, isobutylene, or 1-hexene, further preferably ethylene or propylene.

Examples of the monomer copolymizable with the olefin monomer include vinyl acetate, (meth)acrylic acid ester, and styrene.

Examples of the polyolefin resin include ultra-low density polyethylene (VLDPE), low density polyethylene (LDPE), medium density polyethylene (MDPE), high density polyethylene (HDPE), linear low density polyethylene, polypropylene (PP), an ethylene-propylene copolymer, an olefin elastomer (TPO), an ethylene-vinyl acetate copolymer (EVA), an ethylene-(meth)acrylic acid copolymer, and an ethylene-(meth)acrylic acid ester copolymer.

A weight average molecular weight (Mw) of the polyolefin resin is in a range from 10,000 to 2,000,000, preferably from 20,000 to 1,500,000.

The weight average molecular weight (Mw) can be measured by a method described in the description about Examples.

A modifier used for the modification treatment of the polyolefin resin is a compound having a group (hereinafter, referred to as "functional group A") capable of contributing to the cross-linking reaction in a molecule.

Examples of the functional group A include a carboxyl group, carboxylic acid anhydride group, carboxylic acid ester group, hydroxyl group, epoxy group, amide group, ammonium group, nitrile group, amino group, imide group, isocyanate group, acetyl group, thiol group, ether group, thioether group, sulfone group, phosphone group, nitro group, urethane group, and halogen atom. Among these, as the functional group A, a carboxyl group, a carboxylic acid anhydride group, a carboxylic acid ester group, a hydroxyl group, an ammonium group, an amino group, an imide group, or an isocyanate group is preferable, a carboxylic acid anhydride group or an alkoxysilyl group is more preferable, and a carboxylic acid anhydride group is particularly preferable.

The compound having the functional group A may have two or more functional groups A in a molecule.

Examples of the modified polyolefin resin include an acid-modified polyolefin resin and a silane-modified polyolefin resin. The modified polyolefin resin is preferably an acid-modified polyolefin resin from the viewpoint of adhesiveness to a target to be heated and a wire and productivity.

The acid-modified polyolefin resin refers to a resin obtained by graft-modifying the polyolefin resin with an acid. The acid-modified polyolefin resin is exemplified by a resin obtained by reacting a polyolefin resin with an unsaturated carboxylic acid to introduce (graft modify) a carboxyl group. Herein, the unsaturated carboxylic acid includes the concept of a carboxylic acid anhydride, and the carboxyl group includes the concept of a carboxylic acid anhydride group.

Examples of the unsaturated carboxylic acid to react with the polyolefin resin include maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic acid anhydride, norbornene dicarboxylic acid anhydride, and tetrahydrophthalic acid anhydride.

One of the unsaturated carboxylic acids can be used alone or two or more thereof can be used in combination. Among these, maleic anhydride is preferable.

An amount of the unsaturated carboxylic acid to react with the polyolefin resin is preferably in a range from 0.1 part by mass to 5 parts by mass, more preferably from 0.2 parts by mass to 3 parts by mass, further preferably from 0.2 parts by mass to 1.0 parts by mass with respect to 100 parts by mass of the polyolefin resin. The acid-modified polyolefin resin (adhesive agents) in which the amount of the unsaturated carboxylic acid is in the above range is superior in adhesive strength.

As the acid-modified polyolefin resin, a commercially available product can also be used. The commercially available product is exemplified by Admer (registered trademark) (manufactured by Mitsui Chemicals), Unistor (registered trademark) (manufactured by Mitsui Chemicals), BondyRam (manufactured by Polyram), orevac (registered trademark) (manufactured by ARKEMA), and Modic (registered trademark) (manufactured by Mitsubishi Chemical Corporation).

Examples of the polyolefin resin that is a precursor of the silane-modified polyolefin resin include the polyolefin resin exemplified by the above acid-grafted polyolefin resin (acid-modified polyolefin resin).

The silane-modified polyolefin resin refers to a resin obtained by graft-modifying the polyolefin resin with an unsaturated silane compound. The silane-modified polyolefin resin has a structure in which an unsaturated silane compound as a side chain is graft-copolymerized with a polyolefin resin as a main chain. Examples of the silane-modified polyolefin resin include a silane-modified polyethylene resin and a silane-modified ethylene-vinyl acetate copolymer, among which the silane-modified polyethylene resin such as silane-modified low-density polyethylene, silane-modified ultra-low-density polyethylene, and silane-modified linear low-density polyethylene are preferable.

As the unsaturated silane compound to react with the polyolefin resin, a vinylsilane compound is preferable. Examples of the unsaturated silane compound to react with the polyolefin resin include vinyltrimethoxysilane, vinyltriethoxysilane, vinyltripropoxysilane, vinyltriisopropoxysilane, vinyltributoxysilane, vinyltripentyloxysilane, and vinyltriphenoxy. Examples thereof include silane, vinyltribenzyloxysilane, vinyltrimethylenedioxysilane, vinyltriethylenedioxysilane, vinylpropionyloxysilane, vinyltriacetoxysilane, and vinyltricarboxysilane. One of the unsaturated silane compounds can be used alone or two or more thereof can be used in combination.

As a condition for graft-polymerizing the unsaturated silane compound on the polyolefin resin as a main chain, a known method of graft polymerization may be adopted.

An amount of the unsaturated silane compound to react with the polyolefin resin is preferably in a range from 0.1 part by mass to 10 parts by mass, more preferably from 0.3 parts by mass to 7 parts by mass, further preferably from 0.5 parts by mass to 5 parts by mass with respect to 100 parts by mass of the polyolefin resin. The silane-modified polyolefin resin (adhesive agents) in which the amount of the unsaturated silane compound for reaction is in the above range is superior in adhesive strength.

As the silane-modified polyolefin resin, a commercially available product can also be used. The commercially available product is exemplified by Linkron (registered trademark) (manufactured by Mitsubishi Chemical Corporation). Among Linkron, low-density polyethylene-based Linkron, linear low-density polyethylene-based Linkron, ultra-low-density polyethylene-based Linkron, and ethylene-vinyl acetate copolymer-based Linkron can be preferably used.

One of the modified polyolefin resin can be used alone or two or more thereof can be used in combination.

When the first adhesive agent layer 12 contains the modified polyolefin resin, the content of the modified polyolefin resin is preferably in a range from 30% by mass to 95% by mass, more preferably from 45% by mass to 90% by mass with respect to the entire first adhesive agent layer 12. The first adhesive agent layer 12 in which the content of the modified polyolefin resin is within this range is superior in adhesive strength.

The first adhesive agent layer 12 may contain an inorganic filler. When the first adhesive agent layer 12 contains the inorganic filler, the hardness of the adhesive agent layer after curing can be improved. Moreover, when the first adhesive agent layer 12 contains the inorganic filler, the thermal conductivity of the first adhesive agent layer 12 can be improved. Further, when the adherend contains glass as a main component, linear expansion coefficients of the conductive adhesive sheet 10 and the adherend can be brought close to each other by containing the inorganic filler in the first adhesive agent layer 12. As a result, reliability of an article provided with the conductive adhesive sheet, which is obtained by attaching the conductive adhesive sheet 10 to the adherend and curing as necessary, is improved.

Examples of the inorganic filler include inorganic powder (e.g., powders of silica, alumina, talc, calcium carbonate, titanium white, colcothar, silicon carbide, and boron nitride), beads of spheroidized inorganic powder, single crystal fiber, and glass fiber. Among the above, a silica filler and an alumina filler are preferable as the inorganic filler. One of the inorganic fillers may be used alone or two or more thereof may be used in combination.

The first adhesive agent layer 12 may contain other component(s). Examples of other component(s) include known additives such as an organic solvent, flame retardant, tackifier, UV absorber, antioxidant, preservative, fungicide, plasticizer, defoamer, wettability modifier, antistatic agent, light stabilizer, resin stabilizer, pigment, bulking agent, and softener.

The thickness t1 of the first adhesive agent layer 12 is preferably in a range from 1 μm to 100 μm, more preferably from 5 μm to 60 μm, further preferably from 10 μm to 30 μm from the viewpoint of the adhesive strength and suppressing the embedding of the conductive linear body 18 inside the first adhesive agent layer 12.

A ratio (t2/t1) of the thickness t2 of the second adhesive agent layer 14 to the thickness t1 of the first adhesive agent layer 12 is preferably in a range from 0.1 to 10, more preferably from 0.3 to 3, further preferably from 0.5 to 2.

Second Adhesive Agent Layer

The second adhesive agent layer 14 is a layer containing an adhesive agent.

An adhesive agent contained in the second adhesive agent layer 14 is the same as the adhesive agent contained in the first adhesive agent layer 12, and the preferred examples are also the same.

The first adhesive agent layer 12 and the second adhesive agent layer 14 may be mutually the same or different in structure.

The thickness t2 of the second adhesive agent layer 14 is preferably in a range from 1 μm to 100 μm, more preferably from 5 μm to 60 μm, further preferably from 10 μm to 30 μm from the viewpoint of the adhesive force to an adherend.

Third Layer

The third layer 16 is not particularly limited as long as having the storage modulus at 25 degrees C satisfying $2.5 \times 10^5$ Pa or more, but is preferably a thermoplastic elastomer layer. The thermoplastic elastomer layer is preferably a layer containing a modified polyolefin resin or a rubber material layer, and more preferably a rubber material layer from the viewpoint of low moisture permeability and stretchability.

Further, as the modified polyolefin resin used for the third layer 16, the modified polyolefin resin described in the section of the first adhesive agent layer 12 can be used.

Thermoplastic Elastomer Layer

Examples of the thermoplastic elastomer of the thermoplastic elastomer layer include a urethane elastomer, olefin elastomer, vinyl chloride elastomer, polyester elastomer, styrene elastomer, acrylic elastomer, and amide- elastomer. As the thermoplastic elastomer, it is preferable to use a styrene elastomer from the viewpoint of durability and corrosion prevention of the conductive linear body.

The urethane elastomer is generally obtained by reacting a long-chain polyol, a chain extender, and a diisocyanate. The urethane elastomer includes a soft segment having a structural unit derived from a long-chain polyol and a hard segment having a polyurethane structure obtained by reacting a chain extender with a diisocyanate.

The urethane elastomer is classified according to a type of long-chain polyol into a polyester polyurethane elastomer, polyether polyurethane elastomer, polycarbonate polyurethane elastomer, and the like. In the exemplary embodiment, the urethane elastomer is preferably a polyether polyurethane elastomer from the viewpoint of being easy to stretch greatly.

Examples of the long-chain polyol include polyester polyol such as lactone polyester polyol and adipate polyester polyol; polyether polyols such as polyethylene glycol, polypropylene glycol, and polytetramethylene ether glycol; and polycarbonate polyol. In the exemplary embodiment, the long-chain polyol is preferably adipate polyester polyol from the viewpoint of being easy to stretch greatly.

Examples of diisocyanate include 2,4-toluene diisocyanate, 2,6-toluene diisocyanate, 4,4'-diphenylmethane diisocyanate, and hexamethylene diisocyanate. In the exemplary embodiment, diisocyanate is preferably hexamethylene diisocyanate from the viewpoint of being easy to stretch greatly.

Examples of the chain extender include low molecular weight polyhydric alcohol (e.g., 1,4-butanediol and 1,6-hexanediol), and aromatic diamine. Among the examples, it is preferable to use 1,6-hexanediol from the viewpoint of being easy to stretch greatly.

The olefin elastomer contains at least one resin selected from the group consisting of ethylene / α-olefin copolymer, propylene / α-olefin copolymer, butene / α-olefin copolymer, ethylene / propylene / α-olefin copolymer, ethylene / butene / α-olefin copolymer, propylene / butene-α olefin copolymer, ethylene / propylene / butene-α / olefin copolymer, styrene / isoprene copolymer, and styrene / ethylene / butylene copolymer.

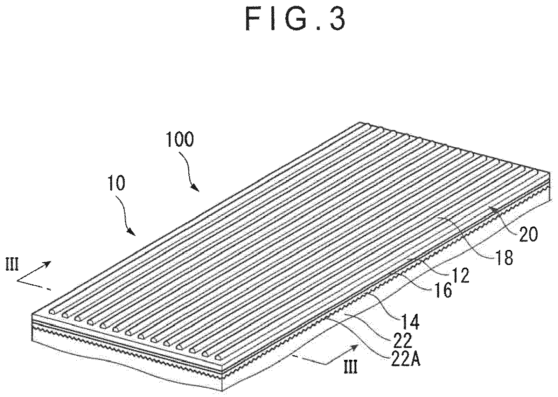

A density of the olefin elastomer is not particularly limited. For instance, the density of the olefin elastomer is preferably 0.860 g/cm$^3$ or more and less than 0.905 g/cm$^3$, more preferably 0.862 g/cm$^3$ or more and less than 0.900 g/cm$^3$, particularly preferably 0.864 g/cm$^3$ or more and less than 0.895 g/cm$^3$. When the density of the olefin elastomer satisfies the above range, the followability of the third layer 16 to irregularities is improved. As a result, even if an adherend 22 (see Figs. 3 to 6) having relatively large irregularities is attached to the conductive adhesive sheet 10, the shape of the first adhesive agent layer 12 can be easily maintained.

The olefin elastomer has a mass ratio (herein also referred to as "olefin content ratio") of a monomer formed of an olefin compound is preferably in a range from 50% by mass to 100% by mass among all the monomers used for forming the olefin elastomer.

When the olefin content ratio is 50% by mass or more, properties as an elastomer containing a structural unit derived from an olefin are likely to be exhibited, and the third layer 16 is likely to exhibit flexibility and rubber elasticity.

From the viewpoint of stably obtaining flexibility and rubber elasticity, the olefin content ratio is preferably 50% by mass or more, more preferably 60% by mass or more.

Examples of the styrene elastomer include a styrene-conjugated diene copolymer and a styrene-olefin copolymer. Specific examples of the styrene-conjugated diene copolymer include: an unhydrogenated styrene-conjugated diene copolymer such as styrene-isobutylene-styrene block copolymer (SIBS), styrene-butadiene copolymer, styrene-butadiene-styrene copolymer (SBS), styrene-butadiene-butylene-styrene copolymer, styrene-isoprene copolymers, styrene-isoprene-styrene copolymer (SIS), and styrene-ethylene-isoprene-styrene copolymer; and hydrogenated styrene-conjugated diene copolymer such as styrene-ethylene / propylene-styrene copolymer (SEPS: hydrogenated styrene-isoprene-styrene copolymer), and styrene-ethylene-butylene-styrene copolymer (SEBS, hydrogenated styrene-butadiene copolymer). Examples by a product name of industrially available styrene elastomers include SIBSTAR (manufactured by KANEKA CORPORATION), Tough Prene (manufactured by Asahi Kasei Co., Ltd.), Kraton (manufactured by Kraton Polymer Japan), Sumitomo TPE-SB (manufactured by Sumitomo Chemical Co., Ltd.), Epofriend (manufactured by Daicel Chemical Industry Co., Ltd.), Lavalon (Mitsubishi Chemical Co., Ltd.), Septon (Kuraray Co., Ltd.), and Tough Tech (Asahi Kasei Co., Ltd.). The styrene elastomer may be hydrogenated or unhydrogenated.

Rubber Material Layer

Examples of the rubber material of the rubber material layer include natural rubber, synthetic isoprene rubber (IR), butadiene rubber (BR), styrene-butadiene rubber (SBR), chloroprene rubber (CR), acrylonitrile-butadiene copolymer rubber (NBR), butyl rubber (IIR), halogenated butyl rubber, acrylic rubber, urethane rubber, polysulfide rubber. One of the rubber materials can be used alone or two or more thereof can be used in combination.

The third layer 16 may be a laminated film in which a plurality of films made of the materials exemplified in the above-mentioned "thermoplastic elastomer layer" and the above-mentioned "rubber material layer" are laminated. Moreover, the third layer 16 may be a laminated film in which a film made of the material exemplified in the above-mentioned "thermoplastic elastomer layer" and the above-mentioned "rubber material layer" and another film are laminated.

The third layer 16 may contain an additive in a film containing the above resin material as a main material.

Examples of the additive include a pigment, dye, flame retardant, plasticizer, antistatic agent, lubricant, and filler. Examples of the pigment include titanium dioxide and carbon black. Examples of the filler include an organic material such as a melamine resin, an inorganic material such as fumed silica, and a metallic material such as nickel particles.

The content of the additive is not particularly limited, but it is preferable to keep the content of the third layer 16 within a range in which the desired function can be exhibited.

The method for forming a laminate having the first adhesive agent layer 12, the third layer 16, and the second adhesive agent layer 14 in this order (hereinafter, also referred to as "multi-layered adhesive sheet") may be a method of forming the first adhesive agent layer 12, the second adhesive agent layer 14, and the third layer 16 and then laminating the first adhesive agent layer 12, the second adhesive agent layer 14, and the third layer 16 to form a laminate, or a method of sequentially applying and drying the respective compositions of the first adhesive agent layer 12, the second adhesive agent layer 14, and the third layer 16 to remove volatile components to form a laminate. More preferably, the first adhesive agent layer 12, the second adhesive agent layer 14, and the third layer 16 are simultaneously applied, directly laminated and then simultaneously dried to remove volatile components, thereby forming a multi-layer adhesive sheet.

The multi-layered adhesive sheet formed by "simultaneously" drying is preferable from the viewpoint of improving the adhesive force because interfacial adhesion between the layers of this multi-layered adhesive sheet is higher than that of a multi-layered adhesive sheet formed by layering the first adhesive agent layer 12, the second adhesive agent layer 14, and the third layer 16 that are formed in advance.

When the first adhesive agent layer 12 and the second adhesive agent layer 14 contain an energy ray-curing adhesive agent, the third layer 16 is preferably permeable to energy rays. When the energy ray-curing adhesive agent is an ultraviolet curing adhesive agent, the third layer 16 is preferably permeable to ultraviolet ray. When the energy ray-curing adhesive agent is an electron beam-curing adhesive agent, the third layer 16 is preferably permeable to electron beam.

The thickness t3 of the third layer 16 is preferably in a range from 1 $\mu$m to 100 $\mu$m, more preferably from 3 $\mu$m to 50 $\mu$m, further preferably from 5 $\mu$m to 20 $\mu$m from the viewpoint of suppressing the embedding of the conductive linear body 18 inside the first adhesive agent layer 12, and improving the followability to an adherend and the adhesive strength to the adherend.

A ratio (t1/t3) of the thickness t1 of the first adhesive agent layer 12 to the thickness t3 of the third layer 16 is preferably in a range from 1 to 5, more preferably from 2 to 5, further preferably from 3 to 5.

A total thickness ts of the thickness t1 of the first adhesive agent layer 12, the thickness t2 of the second adhesive agent layer 14, and the thickness t3 of the third layer 16 is preferably in a range from 5 $\mu$m to 300 $\mu$m, more preferably from 10 $\mu$m to 200 $\mu$m, further preferably from 15 $\mu$m to 100 $\mu$m from the viewpoint of suppressing the embedding of the conductive linear body 18 inside the first adhesive agent layer 12 and improving the adhesive strength to the adherend.

Pseudo Sheet Structure

The pseudo sheet structure 20 has a structure in which a plurality of conductive linear bodies 18 extending in one direction are arranged at distances from each other. The pseudo sheet structure 20 has a structure in which a plurality of conductive linear bodies 18 extending in one direction are arranged at distances from each other. Specifically, for instance, in the pseudo sheet structure 20, a plurality of linearly extending conductive linear bodies 18 are arranged at equal distances in a direction orthogonal to the length direction of the conductive linear bodies 18. In other words, the pseudo sheet structure 20 has, for instance, a structure in which the conductive linear bodies 18 are arranged in a stripe shape.

A volume resistivity R of each of the conductive linear bodies 18 is preferably in a range from $1.0 \times 10^{-9}$ $\Omega \cdot$m to $1.0 \times 10^{-3}$ $\Omega \cdot$m, more preferably from $1.0 \times 10^{-8}$ $\Omega \cdot$m to $1.0 \times 10^{-4}$ $\Omega \cdot$m. When the volume resistivity R of each of the conductive linear bodies 18 is set in the above range, the surface resistance of the pseudo sheet structure 20 tends to decrease.

The volume resistivity R of each of the conductive linear bodies 18 is measured as follows. Silver paste is applied to both ends of each of the conductive linear bodies 18, and the resistance of a portion having a length of 40 mm from each end is measured to obtain the resistance value of each of the conductive linear bodies 18. Then, a cross-sectional area (unit: m$^2$) of each conductive linear body 18 is multiplied by the above resistance value, and the obtained value is divided by the above measured length (0.04 m) to calculate the volume resistivity R of the conductive linear body 18.

A shape of the cross section of each conductive linear body 18 is not particularly limited, and may have a polygonal shape, a flat shape, an elliptical shape, a circular shape, or the like, but is preferably an oval or circular shape from the viewpoint of compatibility and the like with the first adhesive agent layer 12.

When the cross section of each conductive linear body 18 is circular, the diameter d1 of each conductive linear body 18 is preferably in a range from 5 $\mu$m to 75 $\mu$m, more preferably from 8 $\mu$m to 60 $\mu$m, further preferably from 12 $\mu$m to 40 $\mu$m from the viewpoint of suppressing the embedding of the conductive linear bodies 18 inside the first adhesive agent layer 12.

When the diameter d1 of each conductive linear body 18 is set in a range from 5 $\mu$m to 75 $\mu$m and when each conductive linear body 18 is wavy, straightening of the wavy conductive linear bodies 18 when the conductive adhesive sheet 10 is three-dimensionally formed is less likely to be hindered by the first adhesive agent layer 12.

When the cross section of each conductive linear body 18 is elliptical, it is preferable that a major axis of each conductive linear body 18 is in the same range as the diameter d1 described above. Further, when each conductive linear body 18 is in a form of a linear body obtained by spinning a plurality of conductive linear bodies 18, the longest diameter of the cross section in a direction orthogonal to a long axis direction of the spun linear body (i.e., the maximum value of a distance between any two points on a contour line of the cross section) is in the same range as the diameter d1 described above.

A distance L between the conductive linear bodies 18 is preferably in a range from 0.3 mm to 12.0 mm, more preferably from 0.5 mm to 10.0 mm, further preferably from 0.8 mm to 7.0 mm.

When the distance L between the conductive linear bodies 18 is set to the range from 0.3 mm to 12.0 mm, an area of the first adhesive agent layer 12 exposed between the conductive linear bodies 18 is secured. The adhesion by the first adhesive agent layer 12 exposed on the pseudo sheet structure 20 can be prevented from being hindered by the conductive linear bodies 18. Further, when the distance L between the conductive linear bodies 18 is within the above range, the conductive linear bodies 18 are densely packed to some extent, so that the resistance of the pseudo sheet structure 20 can be maintained low. This enables improving the function of the conductive adhesive sheet 10 such as making the distribution of temperature rise uniform when the conductive adhesive sheet 10 is used as a heat-generating body.

The distance L between the conductive linear bodies 18 is determined by observing the conductive linear bodies 18 of the pseudo sheet structure 20 using a digital microscope, and measuring the distance L between adjacent ones of the conductive linear bodies 18. It should be noted that the distance L between the two adjacent conductive linear bodies 18 is a length along a direction in which the conductive linear bodies 18 are arranged, and a length between facing parts of the respective two conductive linear bodies 18 (see Fig. 2). The distance L is an average value of the distances between all adjacent ones of the conductive linear bodies 18 when the arrangement of the conductive linear bodies 18 is unequally spaced, but it is easy to control the value of the distance L. In the pseudo sheet structure 20, the conductive linear bodies 18 are preferably arranged at substantially equal distance, and more preferably at equal distance.

When the conductive linear bodies 18 each have a wavy shape, in some cases, the distance L between the conductive linear bodies 18 is preferably larger because some parts of the conductive linear bodies 18 are closer to each other than the distance L due to curvature and bending of the conductive linear bodies 18. In such a case, the distance L between the conductive linear bodies 18 is preferably in a range from 1 mm to 30 mm, more preferably from 2 mm to 20 mm.

The conductive linear bodies 18 are not particularly limited, but preferably a conductive wire.

Each conductive linear body 18 is preferably at least one selected from the group consisting of a linear body containing a metal wire, a linear body containing carbon nanotubes (hereinafter, also referred to as "carbon nanotube linear body"), and a linear body in a form of a conductively coated string.

Linear Body Containing Metal Wire

When each conductive linear body 18 is a linear body containing a metal wire, the linear body including the metal wire may be a linear body formed of a single metal wire or a linear body made by spinning a plurality of metal wires.

Examples of the metal wire include wires containing metals, such as copper, aluminum, tungsten, iron, molybdenum, nickel, titanium, silver, and gold, or alloys containing two or more metals (e.g., steels such as stainless steel and carbon steel, brass, phosphor bronze, zirconium-copper alloy, beryllium copper, iron nickel, Nichrome, nickel titanium, KANTHAL®, HASTELLOY®, and rhenium tungsten). The metal wire may be plated with gold, platinum, copper, palladium, tin, zinc, silver, nickel, chrome, a nickel-chrome alloy, solder or the like. The surface of the metal wire may be coated with a later-described carbon material or a polymer. In particular, a wire containing one or more metals selected from among tungsten, molybdenum and alloys containing tungsten and molybdenum is preferable in terms of providing the conductive linear bodies 18 with a low volume resistivity.

The examples of the metal wire also include a metal wire coated with a carbon material. Coating the metal wire with the carbon material serves to easily make the presence of the metal wire less noticeable with a metallic luster reduced. In addition, coating the metal wire with the carbon material also serves to reduce metal corrosion.

Examples of the carbon material for coating the metal wire include: amorphous carbon (e.g., carbon black, activated carbon, hard carbon, soft carbon, mesoporous carbon, and carbon fiber), graphite, fullerene, and graphene; and carbon nanotube.

Carbon Nanotube Linear Body

When each conductive linear body 18 is a carbon nanotube linear body, the carbon nanotube linear body is obtained by, for instance, drawing, from an end of a carbon nanotube forest (which is a grown form provided by causing a plurality of carbon nanotubes to grow on a substrate, being oriented in a vertical direction relative to the substrate, and is also referred to as "array"), the carbon nanotubes into a sheet form, and spinning a bundle of the carbon nanotubes after drawn carbon nanotube sheets are bundled. In such a producing method, a ribbon-shaped carbon nanotube linear body is obtained when the bundle of the carbon nanotubes is spun without being twisted, and a string-shaped linear body is obtained when the bundle of the carbon nanotubes is spun while being twisted. The ribbon-shaped carbon nanotube linear body is a linear body without a structure where the carbon nanotubes are twisted. Alternatively, the carbon nanotube linear body can be obtained by, for instance, spinning from a dispersion liquid of carbon nanotubes. The production of the carbon nanotube linear body by spinning can be performed by, for instance, a method disclosed in U.S. Patent Application Publication No. 2013/0251619 (JP 2012-126635 A). In terms of achieving uniformity in diameter of the carbon nanotube linear bodies, it is desirable that string-shaped carbon nanotube linear bodies are used. In terms of obtaining carbon nanotube linear bodies with a high purity, it is preferable that the string-shaped carbon nanotube linear bodies are obtained by twisting the carbon nanotube sheets. The carbon nanotube linear bodies may each be a linear body provided by weaving two or more carbon nanotube linear bodies together. Alternatively, the carbon nanotube linear bodies may each be a linear body provided by combining a carbon nanotube and another conductive material (hereinafter, also referred to as "composite linear body").

Examples of the composite linear bodies include: (1) a composite linear body obtained by depositing an elemental metal or metal alloy on a surface of a forest, sheets or a bundle of carbon nanotubes, or a spun linear body through a method such as vapor deposition, ion plating, sputtering or wet plating in the process of manufacturing a carbon nanotube linear body obtained by drawing carbon nanotubes from an end of the carbon nanotube forest to form the sheets, bundling the drawn carbon nanotube sheets and then spinning the bundle of the carbon nanotubes; (2) a composite linear body in which a bundle of carbon nanotubes is spun with a linear body or composite linear body of an elemental metal or metal alloy; and (3) a composite linear body in which a carbon nanotube linear body or a composite linear body is woven with a linear body or composite linear body of an elemental metal or metal alloy. It should be noted that regarding the composite linear body of (2), a metal may be supported on the carbon nanotubes in spinning the bundle of the carbon nanotubes as the composite linear body of (1). Further, although the composite linear body of (3) is a composite linear body provided by weaving two linear bodies, the composite linear body of (3) may be provided by weaving three or more carbon nanotube linear bodies, linear bodies of an elemental metal, or linear bodies or composite linear bodies of a metal alloy, as long as at least one linear body of an elemental metal, or linear body or composite linear body of a metal alloy is contained.

Examples of the metal for the composite linear body include elemental metals such as gold, platinum, palladium, silver, copper, iron, aluminum, nickel, chrome, tin, and zinc and alloys. Examples of the alloys as the metal for the composite linear body include at least two metals selected from the group consisting of elemental metals such as gold, platinum, palladium, silver, copper, iron, aluminum, nickel, chrome, tin, and zinc. The alloys as the metal for the composite linear body are, for instance, copper-nickel-phosphorus alloy and copper-iron-phosphorus-zinc alloy.

Linear Body Formed As Conductively Coated String

When each conductive linear body 18 is a linear body in a form of a conductively coated string, examples of the string include strings made of resins such as nylon and polyester by spinning. Examples of the conductive coating include a metal coating, a conductive polymer coating and a carbon material coating. The conductive coating can be formed by plating, vapor deposition or the like. The linear body in a form of a conductively coated string can be improved in conductivity of the linear body with flexibility of the string maintained. In other words, the linear body in a form of a conductively coated string facilitates a reduction in resistance of the pseudo sheet structure 20.

Manufacturing Method of Conductive Adhesive Sheet

A manufacturing method of the conductive adhesive sheet 10 according to the exemplary embodiment is not particularly limited. The conductive adhesive sheet 10 is manufactured, for instance, through the following steps.

First, on the release layer, the composition for forming the second adhesive agent layer 14, the composition for forming the third layer 16, and the composition for forming the first adhesive agent layer 12 are simultaneously applied using a multilayer die coater in the order of laminating from a side close to the release layer, and simultaneously forming the second adhesive agent layer 14, the third layer 16, and the first adhesive agent layer 12. The coating is simultaneously dried to prepare a multi-layered adhesive sheet in which the second adhesive agent layer 14, the third layer 16, and the first adhesive agent layer 12 are formed in this order on the release layer.

Next, the conductive linear bodies 18 are arranged on the first adhesive surface 12A of the first adhesive agent layer 12 to form the pseudo sheet structure 20. For instance, in a state where a multi-layered adhesive sheet with a release layer is arranged on an outer circumferential surface of a drum member, specifically, in a state where the release layer is arranged inner and the first adhesive agent layer 12 outer with respect to the drum member, the conductive linear body 18 is spirally wound on the first adhesive surface 12A of the first adhesive agent layer 12 while rotating the drum member. Subsequently, the bundle of the conductive linear bodies 18 spirally wound is cut along the axial direction of the drum member. As a result, the pseudo sheet structure 20 is formed, and the conductive linear bodies 18 are arranged on the first adhesive surface 12A of the first adhesive agent layer 12. Then, a laminate with a release layer on which the pseudo sheet structure 20 is formed (a laminate with a release layer, in which the second adhesive agent layer 14, the third layer 16, and the first adhesive agent layer 12 having the conductive linear bodies 18 are arranged) is taken out from the drum member, whereby the conductive adhesive sheet 10 with the release layer can be obtained. According to this method, for instance, while rotating the drum member, a feeder of the conductive linear bodies 18 is moved along a direction parallel to an axis of the drum member, thereby facilitating adjusting the distance L between the adjacent ones of the conductive linear bodies 18 in the pseudo sheet structure 20.

The conductive adhesive sheet 10 may be manufactured by forming the pseudo sheet structure 20 by arranging the conductive linear bodies 18, and subsequently attaching the second surface 20B of the obtained pseudo sheet structure 20 onto the first adhesive surface 12A of the first adhesive agent layer 12.

Alternatively, the conductive adhesive sheet 10 may be formed by arranging the conductive linear bodies 18 on the first adhesive agent layer 12 provided on the release layer to form the pseudo sheet structure 20, subsequently removing the release layer, and sequentially laminating the third layer 16 and the second adhesive agent layer 14 on the second adhesive surface 12B of the first adhesive agent layer 12.

Characteristics of Conductive Adhesive Sheet

When transparency is required for the conductive adhesive sheet 10, the light transmittance of the conductive adhesive sheet 10 according to the exemplary embodiment is preferably 70% or more, more preferably in a range from 70% to 100%, further preferably from 80% to 100%.

The light transmittance of the conductive adhesive sheet 10 is an average value obtained by measuring the light transmittance in a visible region (from 380 nm to 760 nm) with a light transmittance meter.

The surface resistance ($\Omega/\square$ = $\Omega$/sq.) of the conductive adhesive sheet 10 according to the exemplary embodiment is preferably 800$\Omega/\square$ or less, more preferably from 0.01 $\Omega/\square$ to 500$\Omega/\square$, further preferably from 0.05 $\Omega/\square$ to 300 $\Omega/\square$. When the conductive adhesive sheet 10 is applied as a heat-generating body, the conductive adhesive sheet 10 having a low surface resistance is required from the viewpoint of reducing the applied voltage. When the surface resistance of the conductive adhesive sheet 10 is 800$\Omega/\square$ or less, the applied voltage can be easily reduced.

The surface resistance of the conductive adhesive sheet 10 is measured by the following method. After the conductive adhesive sheet 10 and a copper tape are attached to a glass substrate to which the copper tape is attached at both ends so as to be in contact with each other, the resistance is measured using an electric tester to calculate the surface resistance of the conductive adhesive sheet 10.

Method of Using Conductive Adhesive Sheet

The conductive adhesive sheet 10 according to the exemplary embodiment is used, for instance, with being attached to an adherend. When any one or more of the first adhesive agent layer 12, the second adhesive agent layer 14 and the third layer 16 is a curable layer, the curable layer is cured after the conductive adhesive sheet 10 is attached to the adherend.

When the conductive adhesive sheet 10 is attached to the adherend, the second adhesive surface 14B of the second adhesive agent layer 14 of the conductive adhesive sheet 10 is attached to the adherend.

Examples of the adherend include a molded body, woven fabric, knitted fabric, non-woven fabric, paper, thermoplastic resin film, cured product film of a curable resin, metal foil, felt, natural leather, synthetic leather, wood, and sponge (e.g., foamed polyethylene and foamed polyurethane) and glass film. A material of the molded body preferably has a property that the surface does not conduct electricity. Examples of the material of the molded body include plastic, ceramic, and metal. Examples of the thermoplastic resin film include resin films such as a polyester resin film, polycarbonate resin film, polyimide resin film, polyolefin resin film, polyurethane resin film and acrylic resin film.

From the viewpoint of more exhibiting the effects of the exemplary embodiment, the adherend is preferably an adherend having relatively large irregularities or an easily deformable adherend, and specifically, more preferably a woven fabric, knitted fabric, non-woven fabric, felt, natural leather, synthetic leather, wood, or sponge.

It is also preferable that the adherend has elasticity. In this case, the adherend is more preferably an elastic resin film, non-woven fabric, knitted fabric or woven fabric.

For instance, when the conductive adhesive sheet 10 is used as a heat-generating body, the heat-generating body is used, for instance, for chairs, sofas, electric blankets, health equipment, thermal treatment for affected areas, foot warmers, and repair of blades of wind power generation.

Further, examples of the use of the heat-generating body include a defogger and a deicer. In this case, examples of the target to be heated include mirrors in bathrooms, windows of transportation devices (e.g., passenger cars, railroads, ships, aircraft), windows of buildings, eyewear, lighting surfaces of traffic lights, and signs. The conductive adhesive sheet 10 can also be used as a flat cable for wiring electric signals.

Second Exemplary Embodiment

Laminate

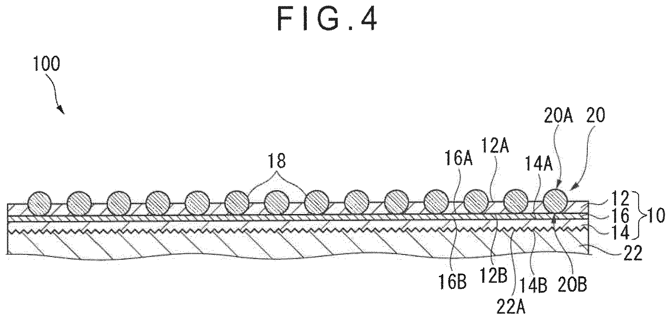

A second exemplary embodiment will be described with reference to Figs. 3 and 4.

A laminate 100 of the second exemplary embodiment includes the conductive adhesive sheet 10 of the first exemplary embodiment and the adherend 22. Since the conductive adhesive sheet 10 is the same as that of the first exemplary embodiment, the description of the conductive adhesive sheet 10 will be omitted or simplified.

In the laminate 100 of the second exemplary embodiment, as shown in Figs. 3 and 4, the adherend 22 is attached on the second adhesive surface 14B of the second adhesive agent layer 14 of the conductive adhesive sheet 10.

The adherend 22 has a first adherend surface 22A having an arithmetic mean roughness Ra in a range from 1 $\mu$m to 150 $\mu$m. The adherend 22 is attached so that the first adherend surface 22A faces the second adhesive surface 14B of the second adhesive agent layer 14.

The arithmetic mean roughness Ra of the first adherend surface 22A is in a range from 1 $\mu$m to 150 $\mu$m,

preferably from 5 $\mu$m to 100 $\mu$m, more preferably from 15 $\mu$m to 80 $\mu$m.

The arithmetic mean roughness Ra of the adherend 22 is the average of absolute values of heights of roughness curves at a reference length defined by JIS-B0601 (2001).

The arithmetic mean roughness Ra of the adherend 22 can be measured using a surface test device (manufactured by Kato Tech Co., Ltd., product number KES-FB4).

Since the laminate 100 of the exemplary embodiment includes the conductive adhesive sheet 10 of the first exemplary embodiment, even if an adherend (an adherend having relatively large irregularities) having the arithmetic mean roughness Ra of the first adherend surface 22A falling within the above range is attached to the conductive adhesive sheet 10, the conductive linear bodies 18 can be suppressed from being embedded inside the first adhesive agent layer 12. Accordingly, when electrodes are set to the conductive adhesive sheet 10, electrical connection between the conductive linear bodies 18 and the electrodes becomes favorable.

Third Exemplary Embodiment

Heat-Generating Device

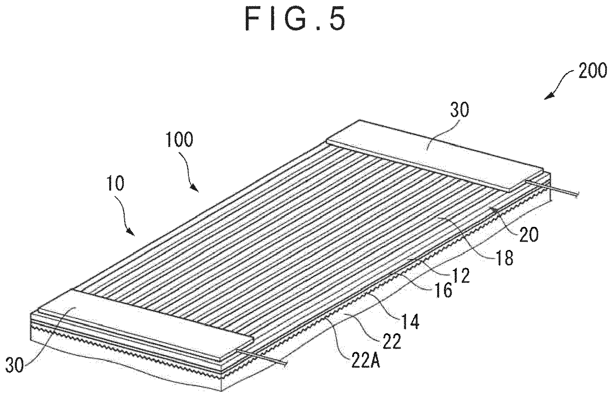

A third exemplary embodiment will be described with reference to Fig. 5.

A heat-generating device 200 of the third exemplary embodiment includes the laminate 100 of the second exemplary embodiment and electrodes 30. Since the laminate 100 is the same as that of the second exemplary embodiment, the description of the laminate 100 will be omitted or simplified.

The heat-generating device 200 of the third exemplary embodiment includes the laminate 100 having the conductive adhesive sheet 10 of the first exemplary embodiment. The conductive adhesive sheet 10 functions as the heat-generating body.

In the heat-generating device 200 of the third exemplary embodiment, as shown in Fig. 5, the electrodes 30 are installed at ends of the conductive linear bodies 18 (the end of the pseudo sheet structure 20). The electrodes 30 are bonded to the pseudo sheet structure 20 by a known method such as a conductive tape or soldering so that power can be supplied to each of the conductive linear bodies 18 of the pseudo sheet structure 20.

It is preferable that the electrodes 30 and a plurality of conductive linear bodies 18 are electrically connected to each other.

Since the heat-generating device 200 of the third exemplary embodiment includes the laminate 100 of the second exemplary embodiment, even if an adherend having relatively large irregularities is attached to the heat-generating device 200, the conductive linear bodies 18 can be suppressed from being embedded inside the first adhesive agent layer 12. Moreover, electrical connection between the conductive linear bodies 18 and the electrodes becomes favorable.

Fourth Exemplary Embodiment

Heat-Generating Device

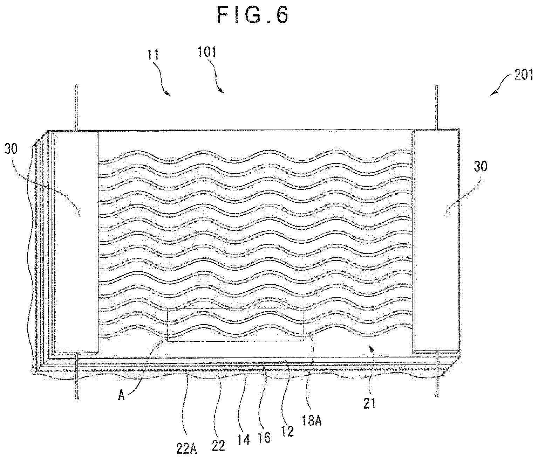

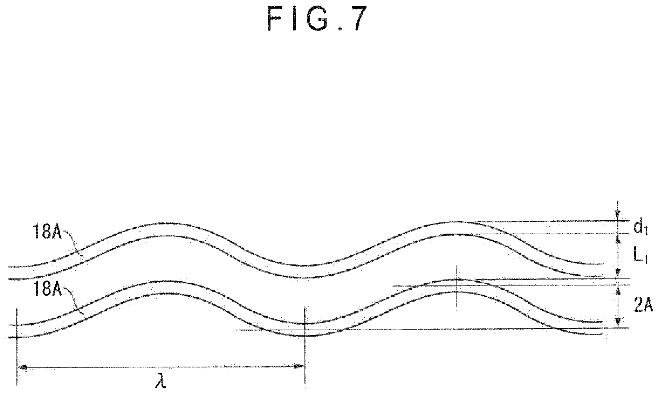

A fourth exemplary embodiment will be described with reference to Figs. 6 and 7.

A heat-generating device 201 of the fourth exemplary embodiment uses a conductive adhesive sheet 11 in place of the conductive adhesive sheet 10 of the first exemplary embodiment. Since the heat-generating device 201 is otherwise the same as that of the third exemplary embodiment, the description of the heat-generating device 201 will be omitted or simplified.

The heat-generating device 201 of the fourth exemplary embodiment includes a laminate 11 having the conductive adhesive sheet 11 and the electrodes 30.

In the conductive adhesive sheet 11, as shown in Fig. 6, conductive linear bodies 18A each have a wavy shape in a plan view of the conductive adhesive sheet 11.

The conductive adhesive sheet 11 includes a pseudo sheet structure 21 in which a plurality of wavy conductive linear bodies 18A extending in one direction are arranged at equal distance in a direction orthogonal to the extending direction of the conductive linear bodies 18A.

The conductive linear bodies 18A may have a wave shape such as a sine wave, a square wave, a triangular wave, a sawtooth wave, or a semicircle. Each of the conductive linear bodies 18A may have a wavy shape, or only a part thereof may have a wavy shape and the other part thereof may have a linear shape or the like. Further, two or more wavy shapes (e.g., a sinusoidal wave and a triangular wave) may be combined for each of the conductive linear bodies 18A and the wavy shape of each of the conductive linear bodies 18A may be different in type from the wavy shape of another conductive linear body 18A.

A wavelength A (waveform pitch) and amplitude of the wavy conductive linear bodies 18A are not particularly limited as long as the effects of the present embodiment are not impaired. Provided that the amplitude of each wavy conductive linear body 18A is denoted by A, the wavelength of each wavy conductive linear body 18A is denoted by $\lambda$, the distance between the wavy conductive linear bodies 18A is denoted by $L_1$, and the diameter of the wavy conductive linear body 18A is denoted by $d_1$, it is preferable to satisfy at least one of a numerical formula (Numerical Formula 1C) or a numerical formula (Numerical Formula 1D) (see Fig. 7).

With this arrangement, the adjacent ones of the conductive linear bodies 18A are less likely to be mixed with each other.

$$0.15 \leq 2A/\lambda \leq 5 \qquad \cdots\text{(Numerical Formula 1C)}$$

$$\{(2A - d_1 - L_1)/(2A - d_1)\} \leq 0.8 \qquad \cdots\text{(Numerical Formula 1D)}$$

The distance $L_1$ between the wavy conductive linear bodies 18A is the length between facing parts of the respective two conductive linear bodies 18A.

The heat-generating device 201 of the fourth exemplary embodiment provides the same effects as the heat-generating device 200 of the third exemplary embodiment.

Further, in the fourth exemplary embodiment, since each conductive linear body 18A has a wavy shape in the plan view of the conductive adhesive sheet 11, even when the conductive adhesive sheet 11 is stretched in the length direction (axial direction) of each conductive linear body 18A, cutting of the conductive linear body 18A can be suppressed. In other words, the conductive adhesive sheet 11 can be extended not only in the direction orthogonal to the length direction (axial direction) of the conductive linear bodies 18A but also in the length direction (axial direction) of the conductive linear bodies 18A. Therefore, the conductive adhesive sheet 11 can be more reliably adapted to a curved surface of the adherend 22.

In order to further enhance such an effect, it is preferable that the number of straight portions included in the wave shape is small, and the wave shape is preferably a sine wave.

Modifications of Exemplary Embodiments

The scope of the invention is not limited to the above exemplary embodiments, and modifications, improvements, etc. are included within the scope of the invention as long as they are compatible with an object of the invention.

Modification 1

In the above exemplary embodiments, the conductive linear bodies 18 are partially exposed on the first adhesive agent layer 12. However, the conductive linear bodies 18 do not have to be exposed on the first adhesive agent layer 12.

For instance, it suffices that the conductive linear bodies 18 and the electrodes are brought into contact with each other by pressing the electrodes against the conductive linear bodies 18 when the electrodes are installed on the pseudo sheet structure 20 (conductive linear bodies 18). In this case, a ratio t1/d1 of the thickness t1 of the first adhesive agent layer 12 to the diameter d1 of each conductive linear body 18 is preferably 1.2 or less.

The same applies to the conductive linear bodies 18A.

Modification 2

In the above exemplary embodiments, the conductive linear bodies 18 are in contact with the first surface 16A of the third layer 16, but the conductive linear bodies 18 do not have to be in contact with the first surface 16A of the third layer 16 as long as the adhesiveness between each conductive linear body 18 and the first adhesive agent layer 12 is ensured.

The same applies to the conductive linear bodies 18A.

Modification 3

For instance, the conductive adhesive sheet 10 in the above exemplary embodiments may have a release layer laminated on at least one of the first adhesive surface 12A of the first adhesive agent layer 12 of the pseudo sheet structure 20 or the second adhesive surface 14B of the second adhesive agent layer 14.

The same applies to the conductive adhesive sheet 11.

The release layer is not particularly limited. For instance, from the viewpoint of easy handling, the release layer preferably includes a release base material and a release agent layer formed by applying a release agent onto the release base material. Moreover, the release layer may include the release agent layer only on one surface of the release base material or on both surfaces of the release base material.

Examples of the release base material include a paper base, a laminated paper including a paper base or the like with a thermoplastic resin (e.g., polyethylene) laminated thereon, and a plastic film. Examples of the paper base include glassine paper, coated paper, and cast-coated paper. Examples of the plastic film include a polyester film (e.g., polyethylene terephthalate, polybutylene terephthalate, and polyethylene naphthalate) and a polyolefin film (e.g., polypropylene and polyethylene). Examples of the release agent include an olefin resin, a rubber elastomer (e.g., a butadiene resin and an isoprene resin), a long-chain alkyl resin, an alkyd resin, a fluorine resin, and a silicone resin.

A thickness of the release layer is not particularly limited. The thickness of the release layer is preferably in a range from 20 μm to 200 μm, more preferably from 25 μm to 150 μm.

A thickness of the release agent layer of the release layer is not particularly limited. When the release agent layer is formed by applying a solution containing the release agent, the thickness of the release agent layer is preferably in a range from 0.01 μm to 2.0 μm, more preferably from 0.03 μm to 1.0 μm.

When a plastic film is used as the release base material, a thickness of the plastic film is preferably in a range from 3 μm to 150 μm, more preferably from 5 μm to 100 μm.

Modification 4

In the above exemplary embodiments, the pseudo sheet structures 20 and 21 are each a single layer, but are not limited thereto. For instance, the conductive adhesive sheet 10 may be a sheet in which a plurality of pseudo sheet structures 20 are arranged in a sheet surface direction (direction along the sheet surface), and the conductive adhesive sheet 11 may be a sheet in which a plurality of pseudo sheet structures 21 are arranged in the sheet surface direction. The conductive linear bodies 18 of each of the plurality of pseudo sheet structures 20 may be arranged in parallel with or intersecting with the conductive linear bodies 18 of the other pseudo sheet structures 20 in a plan view of the conductive adhesive sheet 10. The conductive linear bodies 18A of each of the plurality of pseudo sheet structures 21 may be arranged in parallel with or intersecting with the conductive linear bodies 18A of the other pseudo sheet structures 21 in a plan view of the conductive adhesive sheet 11.

Modification 5

In the above exemplary embodiments, the second adhesive surface 14B of the second adhesive agent layer 14 of each of the conductive adhesive sheets 10 and 11 is attached to the adherend 22, but the first adhesive surface 12A of the first adhesive agent layer 12 of each of the conductive adhesive sheets 10 and 11 may be attached to the adherend 22. In this case, the conductive adhesive sheet is used by establishing electrical continuity between the electrodes and the conductive linear bodies in a state where the electrodes are provided on the adherend.

Examples

The invention will be more specifically described with reference to Example(s). It should be noted that Example(s) are not intended to limit the scope of the invention.

Composition 1

A sticky agent composition is provided including: 100 parts by mass of a weight average molecular weight (Mw): 1 million) of an acrylic copolymer having a constituent unit derived from a material monomer including an acrylic copolymer, which is a sticky resin, (n-butylacrylate (BA) / methyl methacrylate (MMA) / vinyl acetate (VAc) / 2-hydroxyethylacrylate (2HEA) = 80.0/10.0/9.0/1.0 (mass ratio); 25 parts by mass (solid content ratio) of a hydrogenated rosin resin (manufactured by Arakawa Chemical Industry Co., Ltd., product name "KE-359", softening point: 94 to 104 degrees C) as a tackifier; and 1.62 parts by mass (solid content ratio) of an isocyanate cross-linker (manufactured by Mitsui Chemicals, Inc., product name "Takenate D-110N") as a cross-linker.

Composition 2

A sticky agent composition is provided including: 100 parts by mass of a weight average molecular weight (Mw): 600 thousand) of an acrylic copolymer having a constituent unit derived from a material monomer including an acrylic copolymer, which is a sticky resin, (n-butylacrylate (BA) / acrylic acid (AAc) = 90.0/10.0 (mass ratio); and 1.5 parts by mass (solid content ratio) of an isocyanate cross-linker (manufactured by Tosoh Corporation, product name "Coronate L") as a cross-linker.

Composition 3

A sticky agent composition is provided including: 100 parts by mass of a weight average molecular weight (Mw): 410 thousand) of an acrylic copolymer having a constituent unit derived from a material monomer including an acrylic copolymer, which is a sticky resin, (n-butylacrylate (BA) / acrylic acid (AAc) = 90.0/10.0 (mass ratio); and 0.74 parts by mass (solid content ratio) of aluminum chelate cross-linking agent (manufactured by Soken Chemical Co., Ltd., product name "M-5A", solid content concentration = 4.95% by mass) as a cross-linker.

Composition 4

A sticky agent composition is provided including: 100 parts by mass of acid-modified polyolefin resin ($\alpha$-olefin polymer, manufactured Mitsui Chemicals, Inc., trade name "Unistor H-200", a weight average molecular weight (Mw): 52,000); 100 parts by mass of a polyfunctional epoxy compound (manufactured by Mitsubishi Chemical Corporation, product name "YX8000", liquid at 25 degrees C, epoxy equivalent 205 g/eq, weight average molecular weight: 1,400); 50 parts by mass of an adhesive-imparting agent (a copolymer of a styrene monomer and an aliphatic-based monomer, softening point of 95 degrees C, manufactured by Mitsui Chemicals, Inc., product name "FTR6100"); and 1 part by mass of an imidazole curing catalyst (manufactured by Shikoku Chemicals Corporation, product name "Curesol 2E4MZ", 2-ethyl-4-methylimidazole).

Weight Average Molecular Weight (Mw)

A value used for a weight average molecular weight (Mw) was obtained by measuring under the following conditions using a gel permeation chromatography (GPC) device (manufactured by Tosoh Corporation, product name "HLC-8320") and converting the measurement value to a weight average molecular weight of standard polystyrene.

Measurement Conditions
Measurement Sample: a tetrahydrofuran solution with a polymer concentration of 1% by mass
Column: a column obtained by sequentially connecting two "TSK gel Super HM-H" and one "TSK gel Super H2000" (both manufactured by Tosoh Corporation)
Column Temperature: 40 degrees C
Developing Solvent: tetrahydrofuran
Flow rate: 0.60 mL/min

Manufacture of Conductive Adhesive Sheet

The conductive adhesive sheets of Examples were manufactured using the compositions 1 to 4.

Example 1

The conductive adhesive sheet of Example 1 was manufactured according to the following method with the composition 1 used for manufacturing the first adhesive agent layer and the second adhesive agent layer and isobutylene thermoplastic elastomer (A) below used for manufacturing the third layer.

A multi-layered adhesive sheet was prepared by a coating method to include: a first release film (trade name: SP-382150 (manufactured by LINTEC Corporation)); an acrylic sticky agent layer (pressure-sensitive adhesive agent layer) with a thickness of 22 $\mu$m as the second adhesive agent layer; an isobutylene thermoplastic elastomer (A) (manufactured by Kaneka Co., Ltd., SIBSTAR 103T) with a thickness of 10 $\mu$m as the third layer; and an acrylic sticky agent layer (pressure-sensitive adhesive agent layer) with a thickness of 18 $\mu$m as the first adhesive agent layer, the layers provided on the first release film in the order from a surface of the first release film.

As a conductive linear body, a tungsten wire (diameter 25 $\mu$m, manufacturer name: Tokusai Co., Ltd., product name: TGW-CS, hereinafter referred to as "wire") was prepared.

Next, the multi-layered adhesive sheet was wound, with a surface of the first adhesive agent layer facing outward, around a drum member having a rubber-made outer circumferential surface in a manner not to make any wrinkle, and both ends of the multi-layered adhesive sheet in a circumferential direction were fixed with a double-sided tape. A wire wound around a bobbin was attached to the surface of the first adhesive agent layer of the multilayer adhesive sheet located near the end of the drum member, and then the wire was unwound from the bobbin and wound by the drum member. The drum member was gradually moved in a direction parallel to a drum axis, so that the wire was wound around the drum member spirally and at equal distances.

In this way, a plurality of wires were provided on the surface of the first adhesive agent layer of the multi-layered adhesive sheet while keeping the distance between adjacent wires constant to form a multi-layered adhesive sheet with fine wire wiring. At this time, the drum member was moved while being vibrated, thereby preparing the wound wires to be in a waveform. The wire was provided at an equal distance of 5.0 mm. Next, a second release film (trade name: SP-381130 (manufactured by LINTEC Corporation)) as the release layer was attached to the wire-arranged surface of the multi-layered adhesive sheet with fine wire wiring. Subsequently, in parallel with the drum axis, the multi-layered adhesive sheet with fine wire wiring was cut together with the second release film.

As described above, a conductive adhesive sheet with a release film (hereinafter, also simply referred to as "conductive adhesive sheet") was obtained.

Example 2

A conductive adhesive sheet of Example 2 was manufactured in the same manner as in Example 1 except that the thickness of the first adhesive agent layer was 28 $\mu$m.

Example 3

A conductive adhesive sheet of Example 3 was manufactured in the same manner as in Example 1 except that the composition 2 was used for manufacturing the first adhesive agent layer and the second adhesive agent layer and an acid-modified polyolefin resin (A) (manufactured by Mitsui Chemicals, Inc., product name "Unistor H-200", mass average molecular weight (Mw): 145,000, glass transition point: -53 degrees C) was used for manufacturing the third layer.

Example 4

A conductive adhesive sheet of Example 4 was manufactured in the same manner as in Example 1 except that the acid-modified polyolefin resin (A) was used for manufacturing the third layer and the thickness of the third layer was 5 $\mu$m.

Example 5

A conductive adhesive sheet of Example 5 was manufactured in the same manner as in Example 1 except that the composition 3 was used for manufacturing the first adhesive agent layer.

Example 6

A conductive adhesive sheet of Example 6 was manufactured in the same manner as in Example 1 except that the thickness of the first adhesive agent layer was 12 $\mu$m.

Comparative 1

A conductive adhesive sheet of Comparative 1 was manufactured in the same manner as in Example 1 except that the second adhesive agent layer and the third layer were excluded in a layer arrangement of the conductive adhesive sheet.

Comparative 2

A conductive adhesive sheet of Comparative 2 was manufactured in the same manner as in Comparative 1 except that the thickness of the first adhesive agent layer was 28 $\mu$m.

Comparative 3

A conductive adhesive sheet of Comparative 3 was manufactured in the same manner as in Example 1 except that the composition 1 was used for manufacturing the third layer.

Comparative 4

A conductive adhesive sheet of Comparative 4 was manufactured in the same manner as in Comparative 1 except that the isobutylene thermoplastic elastomer (A) described in Example 1 was used for manufacturing the first adhesive agent layer.

Comparative 5

A conductive adhesive sheet of Comparative 5 was manufactured in the same manner as in Comparative 3 except that the composition 4 was used for manufacturing the first adhesive agent layer.

Storage Modulus at 25 degrees C

A test piece A having a diameter of 8 mm and a thickness of 1 mm was manufactured from the same composition as the composition forming the layer to be measured. Under measurement conditions shown below, a shear storage modulus G' of the test piece A was measured by a torsional shear method, and the obtained value was defined as a storage modulus at 25 degrees C. Results are shown in Table 1.

Measurement Conditions
Measuring device: viscoelasticity measuring device (manufactured by Anton Paar, device name "MCR300")
Test start temperature: -20 degrees C
Test end temperature: 150 degrees C
Temperature rise rate: 3 degrees C per minute
Frequency: 1 Hz
Measurement temperature: 25 degrees C

Table 1

|  | storage modulus at 25°C [$\times 10^5$ Pa] |
|---|---|
| Composition 1 | 0.66 |
| Composition 2 | 1.1 |
| Composition 3 | 1.7 |
| Composition 4 | 2.5 |
| SIBS | 5.8 |
| H-200 | 26.1 |

Arrangement of Conductive Adhesive Sheet

Table 2 shows arrangements of the respective conductive adhesive sheets manufactured in Examples and Comparatives.

Table 2

| | Second adhesive agent layer | | | Third layer | | | First adhesive agent layer (near wires) | | | | |
|---|---|---|---|---|---|---|---|---|---|---|---|
| | Type | Storage modulus [$\times 10^5$ Pa] | Thickness t2 ($\mu$m) | Type | Storage modulus [$\times 10^5$ Pa] | Thickness t3 ($\mu$m) | Type | Storage modulus [$\times 10^5$ Pa] | Thickness t1 ($\mu$m) | Wire diameter d1 ($\mu$m) | Ratio (t1/d1) |
| Example 1 | Composition 1 | 0.66 | 22 | SIBS | 5.8 | 10 | Composition 1 | 0.66 | 18 | 25 | 0.72 |
| Example 2 | Composition 1 | 0.66 | 22 | SIBS | 5.8 | 10 | Composition 1 | 0.66 | 28 | 25 | 1.12 |
| Example 3 | Composition 2 | 1.1 | 22 | H-200 | 26.1 | 10 | Composition 2 | 1.1 | 18 | 25 | 0.72 |
| Example 4 | Composition 1 | 0.66 | 22 | H-200 | 26.1 | 5 | Composition 1 | 0.66 | 18 | 25 | 0.72 |
| Example 5 | Composition 1 | 0.66 | 22 | SIBS | 5.8 | 10 | Composition 3 | 1.7 | 18 | 25 | 0.72 |
| Example 6 | Composition 1 | 0.66 | 22 | SIBS | 5.8 | 10 | Composition 1 | 0.66 | 12 | 25 | 0.48 |
| Comparative 1 | - | - | 0 | - | - | 0 | Composition 1 | 0.66 | 18 | 25 | 0.72 |
| Comparative 2 | - | - | 0 | - | - | 0 | Composition 1 | 0.66 | 28 | 25 | 1.12 |
| Comparative 3 | Composition 1 | 0.66 | 22 | Composition 1 | 0.66 | 10 | Composition 1 | 0.66 | 18 | 25 | 0.72 |
| Comparative 4 | | - | 0 | - | - | 0 | SIBS | 5.8 | 18 | 25 | 0.72 |
| Comparative 5 | Composition 1 | 0.66 | 22 | Composition 1 | 0.66 | 10 | Composition 4 | 2.5 | 18 | 25 | 0.72 |

Explanation of Tables 1 and 2

"SIBS" represents the isobutylene thermoplastic elastomer (A).
"H-200" represents the acid-modified olefin resin (A).

Evaluation

The following evaluation was performed using the conductive adhesive sheets manufactured in Examples and Comparatives. Results are shown in Table 3.

Adhesive Force

The first release film on the second adhesive agent layer of the conductive adhesive sheet manufactured in each of Examples and Comparatives was peeled off, and a polyester non-woven fabric having a weight of 40 g/m$^2$ and a thickness of 700 $\mu$m was attached to the exposed surface of the second adhesive agent layer. Subsequently, the conductive adhesive sheet was cut to prepare a test piece B having a size of 200 mm in length (MD) and 25 mm in width (TD). The cutting was performed so that with respect to an MD direction and a direction orthogonal to the MD (TD direction), the MD direction coincided with a length direction of the test piece B and the TD direction coincided with a width direction of the test piece B. The MD direction refers to a direction in which the wire is wired (the direction parallel to the wire) in a flow direction at the time of manufacturing.

The prepared test piece B was left to stand in an environment of 23 degrees C and 50% RH (relative humidity) for 2 weeks. Next, the second release film on the first adhesive agent layer was peeled off, and a surface of the first adhesive agent layer on which the wire of the test piece B was arranged was attached to a stainless steel plate (SUS304 polished with #600) in an environment of 23 degrees C and 50% RH (relative humidity) and left to stand for 24 hours in the same environment.

After standing for 24 hours, an adhesive force of the first adhesive agent layer was measured in accordance with JIS Z0237: 2000 under the following conditions.

Measurement Conditions

Device: tensile tester (manufactured by Shimadzu Corporation, Autograph AG-IS 500N)
Peeling angle: 180 degrees
Tensile rate (peeling speed): 300 mm / min
Measurement environment: 23 degrees C and 50% RH

A judgment standard was as follows.

Judgment Standard

A: 5.0 N/25 mm or more

B: less than 5.0 N/25 mm

Wire Adhesiveness

The first release film on the second adhesive agent layer of the conductive adhesive sheet manufactured in each of Examples and Comparatives was peeled off, and a polyester non-woven fabric having a weight of 40 g/m$^2$ and a thickness of 700 $\mu$m was attached to the exposed surface of the second adhesive agent layer. Subsequently, the conductive adhesive sheet was cut to prepare a test piece C having a size of 200 mm in length (MD) and 100 mm in width (TD).

The test piece C (conductive adhesive sheet), from which the second release film on the first adhesive agent layer was peeled off, was wound around a cylinder of $\varphi$30 mm with the wire-arranged surface of the first adhesive agent layer facing outward.

A judgment standard was as follows.

Judgment Standard

A: No floating, peeling or falling of the wire from the surface of the first adhesive agent layer occurred.
B: At least one of floating, peeling or falling of the wire from the surface of the first adhesive agent layer occurred.

Resistance Value

The first release film on the second adhesive agent layer of the conductive adhesive sheet manufactured in each of Examples and Comparatives was peeled off, and a polyester non-woven fabric having a weight of 40 g/m$^2$ and a thickness of 700 $\mu$m was attached to the exposed surface of the second adhesive agent layer. Subsequently, the conductive adhesive sheet was cut to prepare a test piece D having a size of 200 mm in length (MD) and 100 mm in width (TD).
A copper foil (thickness 10 $\mu$m, width 10 mm) was prepared as an electrode.
Next, the second release film on the first adhesive agent layer was peeled off to expose the wire surface.
As shown in Fig. 5, the prepared electrodes (copper foil) were placed on both ends of the wires in a direction orthogonal to the extending direction of the wires, and the electrodes were attached by applying a load of 5 kg. This was defined as a test piece D'.
A tester was applied to the electrodes of the test piece D', and the resistance value immediately after the preparation of the test piece D' and the resistance value after standing for 24 hours with the wire surface exposed were measured, respectively. A change rate (%) of the resistance values was calculated according to the following formula.
The change rate in resistance value (%): {(Resistance value of test piece D' immediately after 24 hours with the wire surface exposed)-(Resistance value of test piece D' immediately after manufactured)} / (Resistance value of test piece D' immediately after manufactured) $\times$ 100
A judgment standard was as follows.

Judgment Standard

A: A change rate of the resistance value was less than 20%.
B: A change rate of the resistance value was 20% or more.

Table 3

| | Adhesive force | | Wire adhesiveness | Resistance value |
|---|---|---|---|---|
| | [N/25mm] | Judgement | | |
| Example 1 | 22.5 | A | A | A |
| Example 2 | 26.0 | A | A | A |
| Example 3 | 25.4 | A | A | A |
| Example 4 | 22.0 | A | A | A |
| Example 5 | 19.8 | A | A | A |
| Example 6 | 10.5 | A | A | A |
| Comparative 1 | 2.0 | B | A | B |
| Comparative 2 | 4.6 | B | A | B |
| Comparative 3 | 16.8 | A | A | B |
| Comparative 4 | unmeasurable | - | B | unmeasurable |
| Comparative 5 | 22.0 | A | A | B |

As shown in Table 3, the change rate of the resistance value in each of Examples 1 to 6 having the third layer having the storage modulus of 2.5 $\times 10^5$ Pa or more between the first adhesive agent layer and the second adhesive agent layer was smaller than that of each of Comparatives 1, 2 and 4 without the third layer and that of each of Comparatives 3 and 5 in which a layer having a storage modulus of less than 2.5 $\times 10^5$ Pa was arranged instead of the third layer.

Therefore, according to the conductive adhesive sheet of Examples, even if an adherend having relatively large irregularities such as a non-woven fabric is attached, the embedding of the wires inside the adhesive agent layer can be suppressed. Further, when the electrodes are installed, the electrical connection between the wires and the electrodes can be improved.

Moreover, according to the conductive adhesive sheet of Examples, the evaluation of the adhesive force and the evaluation of the wire adhesiveness are favorable, so that the adhesiveness of the first adhesive agent layer and the adhesiveness between the first adhesive agent layer and the wires are also ensured.

EXPLANATION OF CODES

10,11...conductive adhesive sheet, 12...first adhesive agent layer, 12A.. .first adhesive surface, 12B...second adhesive surface, 14...second adhesive agent layer, 14A...first adhesive surface, 14B...second adhesive surface, 16...third layer, 16A...first surface, 16B...second surface, 18,18A···conductive linear bodies, 20,21 ···pseudo sheet structure, 20A···first surface, 20B···second surface, 22···adherend, 22A···first adherend surface, 30···electrode, 100,101 ···laminate, 200,201···heat-generating device.

**Claims**

1. A conductive adhesive sheet (10,11) comprising:

    a first adhesive agent layer (12);
    a second adhesive agent layer (14); and
    a third layer (16) interposed between the first adhesive agent layer (12) and the second adhesive agent layer (14), wherein
    the first adhesive agent layer (12) has a storage modulus at 25 degrees C of less than $2.5 \times 10^5$ Pa,
    the third layer (16) has a storage modulus at 25 degrees C of $2.5 \times 10^5$ Pa or more, and
    a plurality of conductive linear bodies (18,18A) are arranged to the first adhesive agent layer (12),
    wherein the storage modulus is determined, respectively, by performing a torsional shear method using a viscoelasticity measuring device as disclosed in the Examples part of the description.

2. The conductive adhesive sheet (10,11) according to claim 1, wherein

    a thickness t1 of the first adhesive agent layer (12) and a diameter d1 of each of the conductive linear bodies (18,18A) satisfy a relationship of a numerical formula (Numerical Formula 1) below,

$$0.4 \times d1 \leq t1 \leq 1.2 \times d1\ldots \qquad \text{(Numerical Formula 1)},$$

    wherein the thickness t1 of the first adhesive agent layer (12) is determined by observing a cross section of the first adhesive agent layer (12) using a scanning electron microscope (SEM), measuring the thickess t1 of the first adhesive agent layer (12) at five randomly selected positions, and obtaining an average value of the measured values of the thickness t1, and
    the diameter d1 of the conductive linear bodies (18,18A) is determined by observing the conductive linear bodies (18,18A) with a digital microscope, measuring the diameter d1 of each of the conductive linear bodies (18,18A) at five randomly selected positions, and obtaining an average value of the measured values of the diameter d1.

3. The conductive adhesive sheet (10,11) according to claim 1 or 2, wherein
    the second adhesive agent layer (14) has a storage modulus at 25 degrees C of less than $2.5 \times 10^5$ Pa, which is determined as defined in claim 1.

4. The conductive adhesive sheet (10,11) according to any one of claims 1 to 3, wherein
    the conductive linear bodies (18,18A) are conductive wires.

5. The conductive adhesive sheet (10,11) according to any one of claims 1 to 3, wherein

each of the conductive linear bodies (18,18A) is at least one selected from the group consisting of a linear body comprising a metal wire, a linear body comprising carbon nanotubes, and a linear body in a form of a conductively coated string.

6. The conductive adhesive sheet (10,11) according to any one of claims 1 to 5, wherein the third layer (16) is a thermoplastic elastomer layer.

7. The conductive adhesive sheet (10,11) according to any one of claims 1 to 6, wherein the storage modulus at 25 degrees C of the first adhesive agent layer (12) is less than $2.0 \times 10^5$ Pa.

8. The conductive adhesive sheet (10,11) according to any one of claims 1 to 7, wherein the storage modulus at 25 degrees C of the third layer (16) is $3.5 \times 10^5$ Pa or more.

9. A laminate (100,101) comprising:

the conductive adhesive sheet (10,11) according to any one of claims 1 to 8; and
an adherend (22), wherein
the adherend (22) comprises a first adherend surface (22A) having an arithmetic mean roughness Ra in a range from 1 $\mu$m to 150 $\mu$m, and
the second adhesive agent layer (14) is attached to the first adherend surface (22A),
wherein the arithmetic mean roughness Ra is the average of absolute values of heights of roughness curves at a reference length defined by JIS-B0601 (2001), and can be measured using a surface test device.

10. A heat-generating device (200,201) comprising:

the laminate (100,101) according to claim 9; and
electrodes (30).

11. The heat-generating device (200,201) according to claim 10, wherein the electrodes (30) and the plurality of conductive linear bodies (18,18A) are electrically connected to each other.


**Patentansprüche**

1. Eine leitfähige Klebefolie (10, 11), umfassend:

eine erste Klebstoffschicht (12);
eine zweite Klebstoffschicht (14); und
eine dritte Schicht (16), die zwischen der ersten Klebstoffschicht (12) und der zweiten Klebstoffschicht (14) angeordnet ist, wobei
die erste Klebstoffschicht (12) ein Speichermodul bei 25 °C von weniger als $2.5 \times 10^5$ Pa aufweist,
die dritte Schicht (16) ein Speichermodul bei 25 °C von $2.5 \times 10^5$ Pa oder mehr aufweist und
eine Vielzahl von leitenden linearen Körpern (18, 18A) an der ersten Klebstoffschicht (12) angeordnet sind,

wobei das Speichermodul jeweils durch Durchführung einer Torsionsschermethode unter Verwendung eines Viskoelastizitätsmessgeräts, wie im Beispielsteil der Beschreibung offenbart, bestimmt wird.

2. Die leitfähige Klebefolie (10, 11) nach Anspruch 1, wobei

eine Dicke t1 der ersten Klebstoffschicht (12) und ein Durchmesser d1 jedes der leitenden linearen Körpern (18, 18A) eine Beziehung einer numerischen Formel (Numerische Formel 1) unten erfüllen,

$$0.4 \times d1 \leq t1 \leq 1.2 \times d1 \ldots \quad \text{(Numerische Formel 1)},$$

wobei die Dicke t1 der ersten Klebstoffschicht (12) bestimmt wird, indem ein Querschnitt der ersten Klebstoffschicht (12) unter Verwendung eines Rasterelektronenmikroskops (SEM) beobachtet wird, die Dicke t1 der ersten Klebstoffschicht (12) an fünf zufällig ausgewählten Positionen gemessen wird und ein Durchschnittswert

28

der gemessenen Werte der Dicke t1 erhalten wird, und

der Durchmesser d1 der leitenden linearen Körper (18, 18A) bestimmt wird, indem die leitenden linearen Körper (18, 18A) mit einem Digitalmikroskop beobachtet werden, der Durchmesser d1 jedes der leitenden linearen Körper (18, 18A) an fünf zufällig ausgewählten Positionen gemessen wird und ein Durchschnittswert der gemessenen Werte des Durchmessers d1 ermittelt wird.

3. Leitfähige Klebefolie (10, 11) nach Anspruch 1 oder 2, wobei die zweite Klebstoffschicht (14) ein Speichermodul bei 25 °C von weniger als $2.5 \times 10^5$ Pa, aufweist, das gemäß der Definition in Anspruch 1 bestimmt wird.

4. Die leitfähige Klebefolie (10, 11) nach einem der Ansprüche 1 bis 3, wobei die leitenden linearen Körper (18, 18A) leitende Drähte sind.

5. Die leitfähige Klebefolie (10, 11) nach einem der Ansprüche 1 bis 3, wobei jeder der leitfähigen linearen Körper (18, 18A) mindestens einer ist, der aus der Gruppe ausgewählt ist, die aus einem linearen Körper, der einen Metalldraht umfasst, einem linearen Körper, der Kohlenstoffnanoröhren umfasst, und einem linearen Körper in Form einer leitend beschichteten Schnur besteht.

6. Die leitfähige Klebefolie (10, 11) nach einem der Ansprüche 1 bis 5, wobei die dritte Schicht (16) eine thermoplastische Elastomerschicht ist.

7. Die leitfähige Klebefolie (10, 11) nach einem der Ansprüche 1 bis 6, wobei das Speichermodul bei 25 °C der ersten Klebstoffschicht (12) weniger als $2.0 \times 10^5$ Pa beträgt.

8. Die leitfähige Klebefolie (10, 11) nach einem der Ansprüche 1 bis 7, wobei das Speichermodul bei 25 °C der dritten Schicht (16) $3.5 \times 10^5$ Pa oder mehr beträgt.

9. Ein Laminat (100, 101), umfassend:

   die leitfähige Klebefolie (10, 11) nach einem der Ansprüche 1 bis 8; und
   ein Fügeteil (22), wobei
   das Fügeteil (22) eine erste Fügeteiloberfläche (22A) mit einem arithmetischen Mittelwert der Rauhigkeit Ra in einem Bereich von 1 μm bis 150 μm aufweist, und die zweite Klebstoffschicht (14) an der ersten Klebefläche (22A) befestigt ist,
   wobei das arithmetische Mittel der Rauheit Ra der Durchschnitt der absoluten Werte der Höhen der Rauheitskurven bei einer durch JIS-B0601 (2001) definierten Bezugslänge ist und mit einem Oberflächenprüfgerät gemessen werden kann.

10. Eine wärmeerzeugende Vorrichtung (200, 201), die Folgendes umfasst:

    das Laminat (100, 101) nach Anspruch 9; und
    Elektroden (30).

11. Die wärmeerzeugende Vorrichtung (200, 201) nach Anspruch 10, wobei die Elektroden (30) und die Vielzahl der leitenden linearen Körper (18, 18A) elektrisch miteinander verbunden sind.


**Revendications**

1. Feuille adhésive conductrice (10, 11) comprenant :

   une première couche d'agent adhésif (12) ;
   une deuxième couche d'agent adhésif (14) ; et
   une troisième couche (16) interposée entre la première couche d'agent adhésif (12) et la deuxième couche d'agent adhésif (14), dans laquelle
   la première couche d'agent adhésif (12) a un module de stockage à 25 degrés C de moins que $2,5 \times 10^5$ Pa,
   la troisième couche (16) a un module de stockage à 25 degrés C de $2,5 \times 10^5$ Pa ou plus, et
   une pluralité de corps linéaires conducteurs (18, 18A) sont arrangés à la première couche d'agent adhésif (12),

dans laquelle le module de stockage est déterminé, respectivement, par une méthode de cisaillement en torsion utilisant un dispositif de mesure de la viscoélasticité tel qu'indiqué dans la partie Exemples de la description.

2. Feuille adhésive conductrice (10, 11) selon la revendication 1, dans laquelle

une épaisseur t1 de la première couche d'agent adhésif (12) et un diamètre d1 de chacun des corps linéaires conducteurs (18, 18A) satisfont une relation d'une formule numérique (Formule Numérique 1) ci-dessous,

$$0,4 \times d1 \leq t1 \leq 1,2 \times d1... \text{ (Formule Numérique 1)},$$

dans laquelle l'épaisseur t1 de la première couche d'agent adhésif (12) est déterminée en observant une section transversale de la première couche d'agent adhésif (12) utilisant un microscope électronique à balayage (SEM), en mesurant l'épaisseur t1 de la première couche d'agent adhésif (12) à cinq positions choisies au hasard, et en obtenant une valeur moyenne des valeurs mesurées de l'épaisseur t1, et
le diamètre d1 des corps linéaires conducteurs (18, 18A) est déterminé en observant les corps linéaires conducteurs (18, 18A) avec un microscope numérique, en mesurant le diamètre d1 de chacun des corps linéaires conducteurs (18, 18A) à cinq positions choisies au hasard, et en obtenant une valeur moyenne des valeurs mesurées du diamètre d1.

3. Feuille adhésive conductrice (10, 11) selon la revendication 1 ou 2, dans laquelle
la seconde couche d'agent adhésif (14) a un module de stockage à 25 degrés C inférieur à $2,5 \times 10^5$ Pa, qui est déterminé comme défini dans la revendication 1.

4. Feuille adhésive conductrice (10, 11) selon l'une quelconque des revendications 1 à 3, dans laquelle
les corps linéaires conducteurs (18, 18A) sont des fils conducteurs.

5. Feuille adhésive conductrice (10, 11) selon l'une quelconque des revendications 1 à 3, dans laquelle
chacun des corps linéaires conducteurs (18, 18A) est au moins un choisi dans le groupe constitué d'un corps linéaire comprenant un fil métallique, d'un corps linéaire comprenant des nanotubes de carbone, et d'un corps linéaire sous la forme d'une ficelle recouverte de manière conductrice.

6. Feuille adhésive conductrice (10,11) selon l'une des revendications 1 à 5, dans laquelle
la troisième couche (16) est une couche d'élastomère thermoplastique.

7. Feuille adhésive conductrice (10, 11) selon l'une quelconque des revendications 1 à 6, dans laquelle
le module de stockage à 25 degrés C de la première couche d'agent adhésif (12) est inférieur à $2,0 \times 10^5$ Pa.

8. Feuille adhésive conductrice (10, 11) selon l'une quelconque des revendications 1 à 7, dans laquelle
le module de stockage à 25 degrés C de la troisième couche (16) est $3,5 \times 10^5$ Pa ou plus.

9. Stratifié (100, 101) comprenant :

la feuille adhésive conductrice (10, 11) selon l'une quelconque des revendications 1 à 8 ; et
une adhérence (22), où
l'adhérence (22) comprend une première surface d'adhérence (22A) ayant une rugosité moyenne arithmétique Ra dans une plage de 1 μm à 150 μm, et
la seconde couche d'agent adhésif (14) est fixée à la première surface d'adhérence (22A),
où la rugosité moyenne arithmétique Ra est la moyenne des valeurs absolues des hauteurs des courbes de rugosité à une longueur de référence définie par JIS-B0601 (2001), et peut être mesurée utilisant un dispositif d'essai de surface.

10. Dispositif de génération de chaleur (200, 201) comprenant :

le stratifié (100, 101) selon la revendication 9 ; et
des électrodes (30).

11. Dispositif de génération de chaleur (200,201) selon la revendication 10, dans lequel

les électrodes (30) et la pluralité de corps linéaires conducteurs (18, 18A) sont connectés électriquement les uns aux autres.

# FIG.1

FIG.2

# FIG.3

FIG.4

# FIG.5

EP 3 901 966 B1

FIG.6

# FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003509820 A
- JP H10214676 A
- US 2010175824 A1
- US 5904874 A
- US 20130251619
- JP 2012126635 A